**Europäisches Patentamt**

**European Patent Office**

**Office européen des brevets**

(19)

(11) Publication number: **0 023 254**

**A2**

(12) # EUROPEAN PATENT APPLICATION

(21) Application number: **80103195.6**

(22) Date of filing: **09.06.80**

(51) Int. Cl.³: **H 02 J 13/00**
**H 02 J 3/14**

(30) Priority: 02.07.79 US 54024
02.07.79 US 54025
02.07.79 US 54023
02.07.79 US 53710
02.07.79 US 53719

(43) Date of publication of application:
**04.02.81 Bulletin 81/5**

(84) Designated Contracting States:
**AT BE DE FR GB IT NL SE**

(71) Applicant: **SANGAMO WESTON, INC.**
**180 Technology Drive**
**Norcross Georgia 30092(US)**

(72) Inventor: **Gurr, George P.**
**1758 Withmere Way**
**Dunwoody Georgia 30338(US)**

(72) Inventor: **Wiggins, E. Thomas**
**130 Blenheim Place**
**Dunwoody Georgia 30338(US)**

(72) Inventor: **Nelson, Bruce J.**
**1108 Timberland Drive**
**Lilburn Georgia 30247(US)**

(74) Representative: **Smith, Keith G.W.**
**G.I.E.R.S.- Schlumberger Service de la Propriété**
**Industrielle & des Licenses 12 Place des Etats-Unis**
**F-92120 Montrouge(FR)**

(54) **Method and apparatus for controlling power distribution of an electric utility.**

(57) A method and apparatus which permits a power utility to have direct control of customers loads (CD) with a view toward facilitating enablement of a load management philosophy which includes peak shaving and load deferral. A master control station (MCS), which comprises a programmable microprocessor-based central controller, is in two-way communication with a plurality of substation injection units (SIU), one of each of which is positioned at a separate substation of the power utility. Each substation injection unit (SIU), under the control of its own microprocessor, responds to master control signals from the master control station (MCS) to inject a pulse code signal onto the power lines of the utility. The system includes a plurality of remote receiver units (RRU) which are positioned at and connected to control the on and off times of customer loads (CD). Each remote receiver unit (RRU) is preset to respond to particular pulse code signals from the substation injection units (SIU) to carry out the desired command functions, which can be implemented either automatically or manually on a fixed or dynamic-cycle basis as the need arises. The system utilizes a command signal and pulse code signal verification technique to insure system integrity and reliability.

./...

## FIG. 1

METHOD AND APPARATUS FOR CONTROLLING
POWER DISTRIBUTION OF AN ELECTRIC UTILITY

BACKGROUND OF THE INVENTION

Field Of The Invention

The present invention is related to load management and control for power utilities and, more particularly, is directed to a method and apparatus for permitting an electric utility to selectively control distribution of its power to a plurality of customer loads.

Description Of The Prior Art

Most electrical power utilities must construct their power generating plants with sufficient capacity to meet the total customer power demand at any given point in time. This means that although maximum or peak power demands may occur only relatively infrequently, when compared with the average power demand, the utility must nevertheless have the power generating capacity to meet the peak demand. Many utilities therefore either pay for or charge their customers in accordance with peak power demands rather than average or actual power consumed. If the peak power demand periods can therefore be minimized or controlled, savings to the customer and utility will be effected.

The foregoing situation has lead to the development of load management systems for use by electric power utilities which permit them to control peak demands on the power generating equipment by turning off and on various customer loads during various times. Various types of customer loads which can be regulated in this manner to control and minimize peak power demand include, for example, electric hot water heaters, air conditioning compressors, electric space heaters, and the like.

One type of load management control technique is known as the ripple tone injection method. In such a system, audio frequency pulses are coded by control function and are impressed directly onto the utility's power lines. Receivers located at the customer loads respond to the coded pulses to effect the desired command function.

It is known to provide electromechanical ripple control transmitters, consisting of a motor/alternator set operating through thyristor static switches, to apply the pulse coding to the power lines. It has also recently been proposed to utilize static frequency converters, consisting of a static inverter and suitable coupling network, for a ripple control transmitter. See, for example, "Pulse Coded Inverter For Utility Load Management System", Galloway and Berman, IAS 1977 Annual, pages 149 through 155.

Known United States Patents which relate to power load management include: 3,359,551; 3,886,332; 3,972,470; 4,064,485; 4,075,699; and 4,130,874.

In U.S. Patent No. 3,359,551, for example, a system is disclosed for controlling the operation of a power distribution network in which signals are transmitted over power lines to a plurality of receivers which perform electrical circuit connections and disconnections in response to the received signals. In this system, the signals contain address and command information so

-3-

that one of a plurality of receivers are selected in response to the address portion and a predetermined function is performed in response to the command portion. The transmitter at a selected location employs derivatives of these signals to produce predetermined sequences of relatively high frequency carrier bursts to be fed to the power lines for distribution to tuned receivers at the other end of the line.

In U.S. Patent No. 4,075,699, a power monitoring and load shedding system is described which includes power consumption metering for entering overall power consumption into a central processing unit. Circuitry is provided for the central processing unit to turn local and remote loads on and off in accordance with stored energy consumption projecting and load shedding algorithms.

While each of the prior art systems appear useful in a given context, a practical, centralized load management control system for electric utilities must be cost effective in order that the savings resulting from load management outweighs the cost to the utility and the consumer of the load management system. It is toward achieving this broad objective that the present invention is advanced.

0023254

-4-

## SUMMARY OF THE INVENTION

The foregoing and other objects are attained, in accordance with one aspect of the invention, by comprising a method for controlling the distribution of power along power lines of an electric utility from a substation to a plurality of loads, characterized by: generating master control signals of a programmable digital data processor; communicating said control signals to a substation injection unit located at said substation; injecting pulse code signals onto said power lines under control of a second programmable digital processor in response to said control signals; and operating at least one of a plurality of remote receiver units in response to said pulse code signals to connect or disconnect a load from said power lines.

Another aspect of the invention includes a method for controlling the distribution of power along power lines of an electric utility characterized by the steps of: arranging a plurality of loads into individually controllable load control groups; establishing first, second and third types of control lists, each of said lists including at least one group control command for causing one of said load control groups to be turned on or off; actuating said first type of control list upon command to execute its group control commands once; actuating said second type of control list upon command to execute its group control commands cyclically and repetitively; and actuating said third type of list upon command to execute its group control commands cyclically and repetitively while taking into account the power demand on said utility.

Still another aspect of the invention is attained by a method of injecting a pulse code signal onto power lines of an electric utility for controlling the distribution of power along said power lines characterized by the steps of: transmitting a first binary injecting message representing said desired control command from said master control station to each of said plurality of substation injection units in turn; transmitting a second binary injection message representing said desired control command received in step (a) from each of said substation injection units in turn to said master control station; verifying at said master control station that said second binary message is the same as said first binary message; transmitting a binary commence keying command signal from said master control station to all of said substation injection units simultaneously; generating a pulse code signal representing said first binary injection message at each of said substation injection units verified by step (c); and injecting said pulse code signal generated in step (e) onto the utility's power lines for transmission to a plurality of coded receiver units remotely located at said loads to effect said desired control command.

Yet another aspect of the present invention comprises a method for controlling the firing time and sequence of gated conduction-controlled rectifiers in an inverter characterized by the steps of: providing a portion of address information on an address bus in response to functional commands indicative of the desired mode of operation of said inverter; generating next address information from a first memory in response to said address information; receiving said next address information in a first register and delivering the other portion of said

-6-

addreses information to said address bus; generating next gate control signals from a second memory in response to said address information; receiving said next gate control signals in a second register and providing signals for the gate controlled rectifiers of said inverter.

A further aspect of the invention is attained by a method of controlling the firing of solid state gate controlled rectifying devices in a rectifier bridge that rectifies three-phase AC voltage signals to provide a direct current output, characterized by the step of: providing gate signals to said devices when each phase voltage of said three-phase alternating current voltage signals is most positive and most negative with respect to the other two phase voltage signals.

Another aspect of the invention includes a method for fault detection for an inverter having a plurality of conduction-controlled solid state devices supplied by a source of direct current on a DC bus characterized by the steps of: detecting a shoot-through condition in said conduction-controlled solid state devices; and short circuiting said DC bus in response to the detection of said shoot-through condition.

Yet another aspect of the invention is attained by an apparatus for controlling the distribution of power along power lines of an electric power utility from a substation to a plurality of loads, characterized by: a master contro station including first programmable digital data processor means and input/output devices under the control of an operator for generating master control signals; at least on substation injection unit located at said substation in com munication with said master control station and operating under the control of second programmable digital data processor means for injecting, in response to certain of said master control signals, pulse code signals onto said power lines; and a plurality of remote receiver units each connected to a particular load device and to said power lines for receiving said pulse code signals, each of said remote receiver units being responsive to one of said pulse code signals for connecting or disconnecting its load from said power lines.

A further aspect of the invention includes an apparatus for an inverter controller for controlling the firing time and sequence of gated conduction-controlled rectifiers characterized by: an address bus for providing address information; means responsive to functional commands indicative of the desired mode of operation of said inverter for providing a portion of said address information on said address bus; first memory means responsive to said address information on said address bus for generating next address information; first register means for receiving said next address information from said first memory means and for delivering the other portion of said address information to said address bus; second memory means responsive to said address information on said address bus for generating next gate control signals; and second register means for receiving said next gate control signals from said second memory means for providing signals for the gate controlled rectifiers of said inverter.

Still another aspect of the present invention is attained by a controller for a rectifier of first, second and third phase alternating current voltage signals for supplying a controlled direct current voltage to a load, said rectifier including three pairs of solid state gate controlled rectifying devices connected in a bridge configuration to a common output bus, each of said pair of devices connected to receive one of said first, second or thrid phase voltage signals to rectify both the positive half and negative half of the respective applied voltage signal, characterized by: means for detecting when each of said first, second and third voltage signals is greater than the other two signals and for providing output signals thereupon; and means responsive to said output signals for providing gate control signals to turn on the gates of said solid state gate controlled rectifying devices when each of said voltage signals are most positive and most negative with respect to the other two voltage signals.

Yet another aspect of the present invention is attained by a fault detector for an inverter having a plurality of conduction-controlled solid state devices supplied by a source of direct current on a DC bus, characterized by: means for detecting a shoot-through condition which exists in said conduction-controlled solid state devices of said inverter; and means responsive to said means for detecting a shoot-through condition for short circuiting said DC bus.

-9-

## BRIEF DESCRIPTION OF THE DRAWINGS

Various objects, features and attendant advantages of the present invention will be more fully appreciated as the same becomes better understood with reference to the following detailed description of the present invention when considered in connection with the accompanying drawings, in which:

Figure 1 is an overall block diagram of a preferred embodiment of the system of the present invention;

Figure 2 illustrates the communication message format from the master control station to a substation injection unit;

Figure 3 illustrates the communication message format from a substation injection unit to the master control station;

Figure 4 illustrates the format of the pulse code signals injected by the substation injection unit for transmission to the remote receiver units;

Figure 5 is a block diagram illustrating a preferred embodiment of a remote receiver unit;

Figure 6 is a block diagram illustrating the software components of the master control station;

Figure 7 is a flow chart of the programs utilized in the master control station;

Figure 8 is an overall block diagram of a preferred embodiment of a substation injection unit;

Figure 9 is a block diagram illustrating certain components of a status and input/output board in the substation injection unit;

Figure 10 is another block diagram illustrating the components of a pulse accumulator positioned in the substation injection unit;

-10-

Figure 11 shows an overall functional block diagram of the rectifier controller with inputs and outputs.

Figure 12 illustrates a fault detector located on the DC bus between a three-phase rectifier and a three-phase inverter circuit.

Figure 13A shows the input portion of the rectifier controller, the portion of the logic circuit that controls the gate signals, the gate driving section, and the three-phase rectifier SCR bridge.

Figure 13B includes the shoot-through counter section, the means for determining dwell start, the shoot-through detector, and a simplified representation of one phase of the inverter rectifiers.

Figure 13C shows the input section of the controller which provides communication with the microprocessor which is used to control the overall operation of the inverter and rectifier.

Figure 14A shows the oscillator and inhibit NAND gate for each main SCR gate control.

Figure 14B shows a transistor amplifier used to drive the gates.

Figure 14C shows a gate transformer which is used on the gates of the main and commutate SCRs of the inverter.

Figure 15 shows the timing diagrams which illustrate the dwell start detection, the firing order of the SCRs which produce the envelope following firing pattern, and the detection of relative positive and negative phase voltages.

Figure 16 shows in block diagram form the timing control, memories and registers which provide a state machine control for the inverter.

Figure 17 shows the timing and sequence signals and timing and sequence memory locations.

Figure 18 shows a McMurray inverter for one phase of the AC output.

-11-

Figure 19 shows in simplified form the inverter bridge and the injection transformer.

Figure 20 shows the timing diagrams of the SCR main gates, the SCR commutate gates and the injection transformer input and output voltages.

Figure 21 is a flow chart of the programs utilized in the substation injection unit microprocessor; and

Figure 22 is a graph which illustrates a typical load profile table utilized in the master control station.

-12-

## DETAILED DESCRIPTION OF THE PREFERRED EMBODIMENT

### Table of Contents

I.   General System Description

   A.   Master Control Station (MCS)

   B.   Substation Injection Unit (SIU)

   C.   Communications Between MCS And SIU

   D.   Remote Receiver Unit (RRU)

II.  Load Management Strategy

III. MCS Software

IV.  Substation Injection Unit

   A.   Overall Block Diagram

   B.   Rectifier Controller

   C.   Inverter Controller

   D.   SIU Software

### I.  General System Description

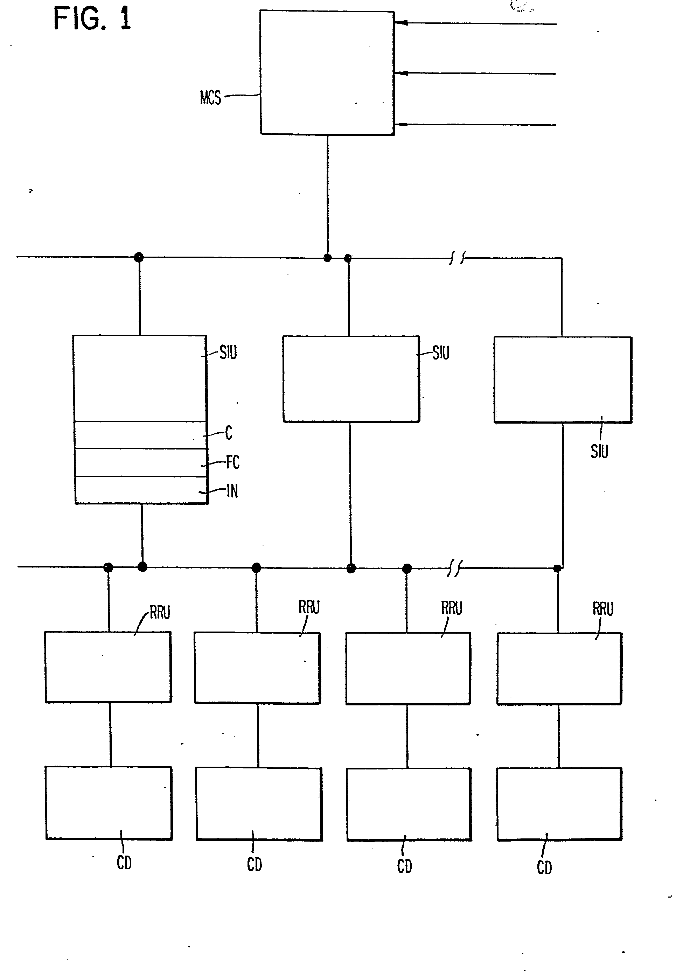

Referring first to Figure 1, there is illustrated a block diagram of a preferred embodiment of the load control system of the present invention.  A master control station MCS is in two-way communication with a plurality of substation injection units SIU over voice grade telephone lines.  Any of a number of substation injection units SIU may be employed, one at each substation of the utility, depending upon the number of loads and areas desired to be controlled. Sixteen such substation injection units SIU are illustrated by way of example.

Each of the substation injection units SIU is, in turn, connected through the power lines of the electric company to a plurality of remote receiver units RRU (up to 200,000 in the example) which, in turn, are each connected to control the on and off times of a controlled device CD which may comprise, for example, an electric hot water heater, air conditioning compressor, or the like.

### A.     Master Control Station (MCS)

The master control station MCS preferably comprises a microprocessor-based computer terminal, such as the Hewlett-Packard Model 9835A which, together with special internal programming and desired input/output devices, serves as an operator interface and as the originator/coordinator of all control instructions to the substation injection units SIU and the remote receiver units RRU. The master control station MCS may generate hard copy reports, archival records, activity files of control actions, operator interchanges, and may display system alarm information. The operator of the master control station MCS may interrogate the system files, adjust automatic control schedules and perform manual control action, in a manner to be described in greater detail hereinafter.

Communication between the master control station MCS and each substation injection unit SIU is over voice grade telephone lines utilizing standard baud rate asynchronous FSK modems. This requires a modem connected at the output of the MCS and at each input to an SIU. The message packets between the master control station MCS and each substation injection unit SIU are fixed length strings of binary characters to be described in greater detail hereinafter.

### B.    Substation Injection Unit (SIU)

Each substation injection unit SIU consists broadly of three sections:  a controller C, a frequency changer FC and an injection network IN.  The controller C converts command and control messages from the master control station MCS into command signals for firing the solid state conduction controlled rectifying devices for the rectifier and inverter of the frequency changer FC. The controller C also responds to requests from the master control station MCS for alarm, status and data information.  A special receiver is positioned in the substation injection unit SIU which is monitored by the controller C to provide information pertaining to the power line injection signal, amplitude and pulse position. The monitored information is sent to the master control station MCS on request in order to permit verification of the accuracy of the pulse code pattern transmitted by the substation injection unit SIU.

The frequency changer FC of the substation injection unit SIU comprises a 60 Hertz-to-injection frequency converter which rectifies the incoming power line's three-phase 60 Hertz signal to form a DC voltage of a controllable magnitude, which is then fed to a static inverter that is turned on and off under direction of the controller C to form the pulse code signal which becomes the pulse code injection message that is transmitted to the remote receiver unit RRU on the power lines of the utility.

The injection network IN comprises a set of passive circuit elements that provide a basic insulation level and a low impedance path from the frequency changer FC to the power line for the pulse code injection message while at the same time providing a high impedance path
to block the 60 Hertz power line energy.

C.    Communications Between MCS and SIU

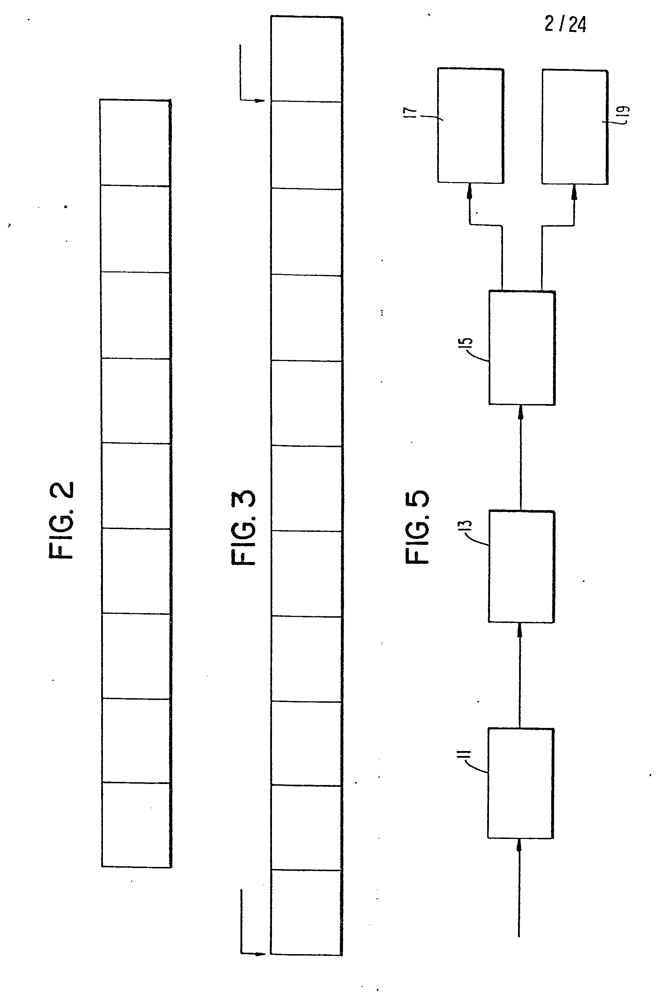

Referring now to Figure 2, there is illustrated
the preferred message format for communications from the
master control station MCS to a substation injection
unit SIU. The block of data between the idle patterns at
the beginnning and end of the block consists of nine
characters of eight bits each.  The first character is a
frame sync character which preferrably comprises an
ASCII start of text character.  Following frame sync is
an eight bit character which defines a particular
substation injection unit SIU.  The next character
defines the particular function that the master control
station MCS wishes the substation injection unit SIU to
perform, in accordance with Table 1 below:

## TABLE 1

### MCS/SIU MESSAGE INTERCHANGE

| No. | Type | Command To SIU | SIU Response |
|-----|------|----------------|--------------|
| 1. | B | Set New Injection Code | Injection Code Received |
| 2. | A | Commence SIU Keying- All SIUs | None |
| 3. | B | Clear Command Register SIU #N | Status and Command Registers |
| 4. | B | Report Status and Command Registers | Status and Command Registers |
| 5. | B | Report Last Injection Code | Last Injection Code Sent |
| 6. | B | Report Status and Data for Measurement Point | Status and Data for Measurement Point |
| 7. | C | Execute-SIU #N | Status and Command Registers |
| 8. | B | Set Injection Power Level | Injection Power Level Received |

Following the SIU function block are five eight bit data characters for defining, for example, the forty bit pulse code desired to be injected onto the power lines. At the end of the message block is a frame sync character which preferably comprises an ASCII end of text character. Transmission of the blocks of characters illustrated in Figure 2 from the master control station MCS onto the telephone lines are received by all substation injection units concurrently. While most transmissions are addressed to only one SIU, some may be addressed to all SIUs. Only an addressed SIU will respond to a command from the MCS. The format of the communication transmissions from the SIU to the MCS illustrated in Figure 3 and is seen to essentially correspond with the MCS to SIU communication format illustrated in Figure 2. In Figure 3, each transmission from an SIU to the MCS is preceded by a line settle period of approximately 200 milliseconds, while there is a 50 millisecond delay between the end of each SIU transmission and the start of the next MCS command transmission. Each of the characters illustrated in Figures 2 and 3 have a start, stop and optional parity bit. The overall message consists of a frame sync character, an SIU address character read from an internal constants register (rather than being the in-bound station address from the MCS), an SIU function character, and five data characters followed by an end of text character as the frame sync. The carrier on and off intevals correspond to the times that the modem carrier of the SIU is turned on and off.

Table 1 above illustrates exemplary SIU function commands forwarded from the master control station MCS to the substation injection units SIU. These messages are encoded in the "SIU FUNCTION" block of Figure 2. There are three general types of messages exchanged between the master control station MCS and the substation injection units SIU. Type A messages are recognized by all substation injection units. There are no SIU responses to the MCS for Type A messages since the SIUs are tied to a common party line and their responses would be mutually interfering. Type B messages are directed to a single SIU. Although the outbound message from the master control station MCS is monitored and passed through the initial stages of processing and decoding by all SIUs, only the single SIU that has a station address match with a station address code contained in the incoming message will continue the processing. Further, for Type B messages, the MCS receives a response from the addressed substation injection unit SIU. Type C messages consist of an order execution command directed to one substation injection unit SIU. This message enables execution of whatever command has been previously established in a software implemented command register in the addressed substation injection unit SIU. In other words, the contents of the command register in the addressed substation injection unit SIU has been previously established by a Type A or Type B message.

The message interchange between the master control station MCS and the substation injection unit SIU is based upon a setup-verify-execute sequence of commands. Message Nos. 1, 3 and 8 in Table 1 are setup commands. The substation injection unit SIU will store the received setup command in an internal software implemented command register. It will also set an internal command pending flag which will remain set for approximately 20 seconds. The substation injection unit SIU will respond to the setup command by sending back to the MCS the contents of its command register which will be a replica of the actual message received. The MCS will compare the SIU response to the original message sent to insure that the SIU is setup correctly. If it is not, there will be three more attempts to set up the SIU correctly. If these attempts fail, the addressed SIU will be marked off-line and designated as "removed from service". If the addressed SIU was set up correctly, the MCS will go to the next SIU and try to set it up, as may be required.

After all of the desired SIU's have been set up and verified, the MCS will send one of the execute commands which consist of Message Nos. 2 or 7 in Table 1. If the execute command is received by the SIU's while the command pending flag is set, the command that was setup will be implemented. If the command pending flag is not set when the execute command is received, the SIU will ignore it and do nothing. Such a condition will be detected by the master control station MCS when it examines the SIU status during routine polling.

Message Nos. 4, 5 and 6 request the status of a particular substation injection unit SIU. Not being setup commands, Message Nos. 4, 5 and 6 do not require an execute command before the addressed SIU will respond. That is, the MCS will request the status and the addressed SIU will respond with the desired status information. Message Nos. 4, 5 and 6 are transmitted twice, and after each transmission, the addressed SIU responds. This enhances system security and insures that the master control station MCS has the correct status information. Following is a discussion of each of the message numbers in Table 1.

Message No. 1 is a command to one substation injection unit SIU to load its software implemented injection register with a specific 40 bit pulse code signal to be injected under local SIU timing control commencing with the reception of Message No. 2. The SIU response to Message No. 1 is the actual injection code that the SIU received which will be compared in the MCS to the injection code that was sent to insure that the set up message was correctly received by the addressed SIU. Each SIU will be set up in turn until all on-line SIUs have been loaded with the injection code and verified. The MCS will then send Message No. 2 which will initiate the transmission of the 40 bit pulse code injection message. The controller in the SIU will respond to the 40 bit pulse code injection message to control the on and off timing of each individual pulse.

Message No. 3 is a command to clear the command register in a particular SIU. The SIU will respond with its status and the contents of its command register. The MCS will check the response to insure that the command was correctly received at the SIU. If it was, the MCS will send Message No. 7 to clear the command register in the addressed SIU. This command will be used on a selective basis to cancel a pending control order.

Message No. 4 is a command to a particular SIU to report its status and the contents of its command register. The SIU response is a message containing the status information read from the SIU status register and the contents of the SIU command register. The status report includes several on/off type of conditions or presence/absence type of conditions that are then interpreted by the MCS as alarm or status information. Items of this nature include overtemperature of the rectifier, overtemperature of the inverter, overtemperature of the cabinet interior, inlet voltage out of range, and the like.

Message No. 5 is a command to a specific SIU to report the last 40 bit pulse code pattern that was injected by the addressed SIU. The latter responds with a binary encoded translation of the 40 bit pulse code pattern read from a special injection monitor receiver connected within the SIU.

Message No. 6 is a command to a specific SIU to report its status and the current value for an analog measurement point. There may be one or a plurality of such analog measurement points located within the SIU, which will be described in greater detail hereinafter. In response to this command, the addressed SIU will read the measurement point, digitize its value, and send the representation back to the MCS.

Message No. 7 is an execute command which directs an SIU to execute a previously stored command, other than pulse code injection messages which are executed by Message No. 2. Message No. 7 is an execute command addressed to only one SIU, and the response is a report by the addressed SIU of its status and the contents of its command register.

Message No. 8 is a command to a selected SIU to set a new injection power level. The response to this command is the status and contents of the command register for the addressed SIU. The response will be compared to the original message that was sent to insure that the SIU is set up correctly. If it is, Message No. 7 will be sent to implement the new injection power level. Message No. 8 is used to dynamically adjust the injection power level for the best overall system performance and will be set based upon, among other things, the number of SIUs that are on-line versus the number of SIUs that are on the system.

D. Remote Receiver Unit

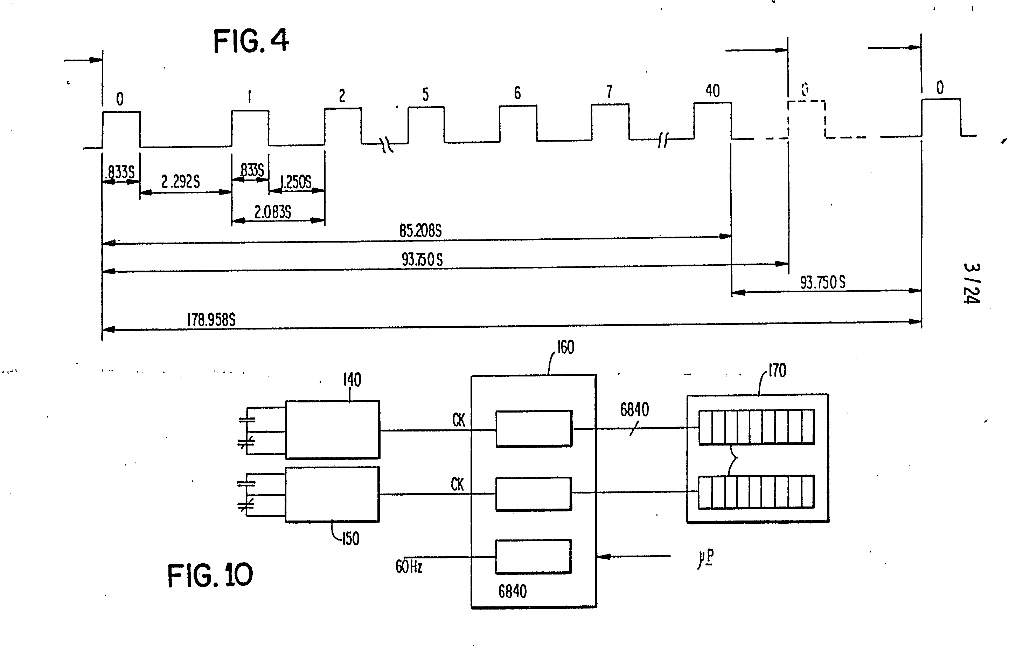

Illustrated in Figure 4 is a preferred format for the pulse code signal transmitted by the substation injection units SIU to the remote receiver units RRU. The control messages are encoded into start, preselect, and execute pulses. The timing of each preselect and execute pulse with respect to the start pulse is precisely controlled. The preferred code includes 41 pulses: the start pulse, which is common to all control messages, numbered 0; seven preselect pulses numbered 5, 10, 15, 20, 25, 30 and 35; and 28 execute pulses numbered 6 through 9, 11 through 14, 16 through 19, 21 through 24, 26 through 29, 31 through 34, and 36 through 39. Every control message consists of a start pulse followed by a preselect pulse, followed by an execute pulse. The total preselect-execute pulse combinations in the preferred embodiment is 112, which allows 112 independent control functions, or 56 simultaneous control functions with one control message transmission. As may be

appreciated from Figure 4, the start pulse is a sync pulse of approximately 0.833 second duration followed by a 2.29 seconds rest period. Although one pulse string may contain several interleaved control commands, in typical applications only a few pulses will be active in any one pulse string. Since the start pulse activates all remote receiver units RRU, each pulse code message or string is separated by an inactive period of approximately 94 seconds to allow any falsely started RRUs to run to their reset position.

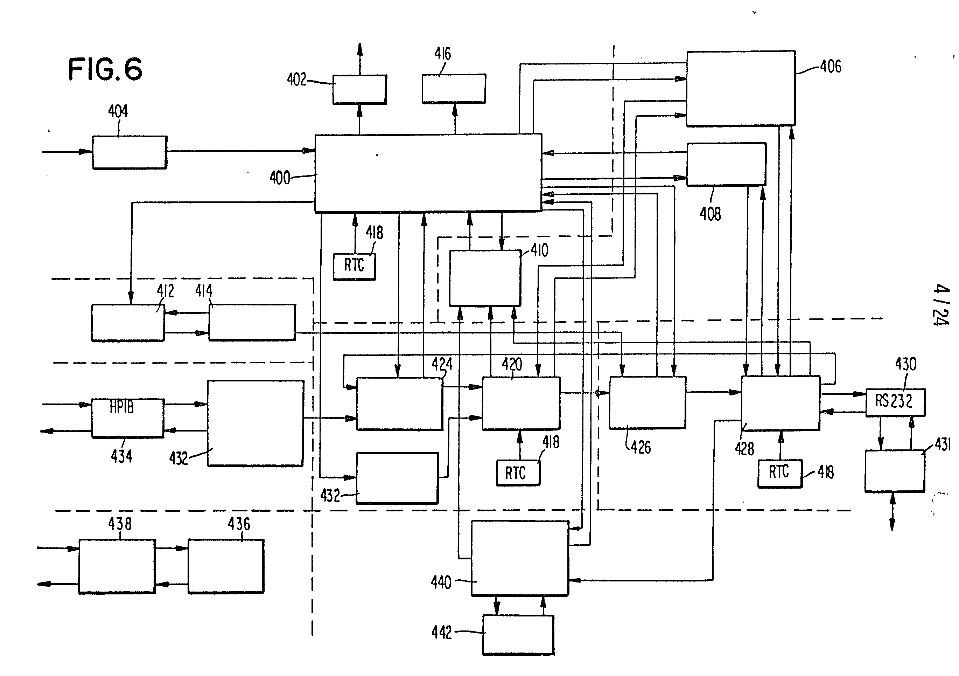

Figure 5 illustrates a block diagram of a preferred embodiment of a remote receiver unit RRU which may comprise, for example, a Sangamo Weston Model 100 receiver. From the power line, the pulse code signal is first received by a frequency selector element 11 that discriminates between a valid control signal and all other parasitic frequencies which may exist on the power lines. Valid frequency signals are passed by frequency selector 11 to a decoder/selector 13 which discriminates between all of the pulses in a particular pulse code so that the particular remote receiver unit RRU acts only on the pulses that the receiver has been coded to recognize. When a proper pulse code signal is decoded by decoder/selector 13, the latter controls a contact block 15 which comprises a set of controlled output contacts for switched loads 17 and 19 which are capable of being activated simultaneously or independently. Both contacts in contact block 15 are preferably single pole, and the operating mechanism allows for positive latching so that different control messages are required to change the contact state from "ON" to "OFF", and vice versa. The absence of a control message or a power failure will not change the state of a latched contact.

In a preferred embodiment, the decoder/selector 13 comprises an electromechanical timing chain which monitors the presence or absence of a pulse in each of the 40 possible positions. When the proper combination of positions or slots have been filled, the output contact 15 is opened or closed. Each remote receiver unit is precoded so that it responds to one and only one pulse code signal; therefore, the switched loads 17 and 19 must be of the same class, for example, electric hot water heaters. In order to control, for example, an air conditioning compressor in the same location, a separately encoded remote receiver unit RRU must be connected thereto to receive the pulse code signal.

II. Load Management Strategy

In the best mode presently contemplated for carrying out the present invention, with the 40 bit pulse injection code signal and remote receivers described above, there are 56 independently operable sets of contacts (on/off pairs) or load control groups. Each contact can control a separate type of load, such as electric hot water heaters, air conditioner compressors, street lights, or the like. Therefore, the operational programs for the master control station MCS has 56 predefined load control groups. Each group can be commanded to turn on (the contact in the receiver will close) or to turn off (the contact in the receiver will close). By turning the load groups on and off at the appropriate times, a desired load management strategy can be implemented. The system operator determines which group to turn on and off and when they should be turned on and off to best control the system load. The program in the master control station will implement the strategy which is set up by the operator.

The control commands that turn the load control groups on and off are linked together by the operator to form control lists. There may be, for example, 20 independent control lists, each containing one or more control commands, which are grouped into the lists according to different characteristics that enable management of various types of loads.

The management strategy of the present invention defines three different types of control lists, referred to hereinafter as Type 1, 2 and 3. Type 1 control lists are of a single pass nature. That is, when the type 1 list is activated, the group control commands in the list are transmitted at a predetermined time from the time the list is activated. When the end of a type 1 list is reached, the control sequence is finished and the list is deactivated. Type 1 control lists are typically used for emergency load shedding or other manually initiated, one shot, preplanned sequential control activity.

Type 2 control lists have a cylic and repetitive nature. When a type 2 control list is activated, the group control commands in the list are sent in a predetermined order. When the end of the list is reached, the program goes back to the beginning of the list to start over. This cyclic action continues until the list is deactivated by an external event or by operator intervention. A type 2 control list is typically utilized for cycling hot water heaters, air conditioners, or street lights.

Type 3 control lists are characterized by a variable duty cycle. Type 3 lists can dynamically adjust the amount of time a controlled load is allowed to be on, depending upon the demand on the electrical network. As the demand on the network increases, the time the loads are allowed to be on decreases, thereby reducing the total demand. The group-off commands for a type 3 control list are evenly spaced over the duration of the cycle. When it is time to turn the next load control group off, the program calculates a new on-to-off ratio based upon the current value of one or more system parameters such as total demand. The new ratio is used to determine the length of time this group will be left off. The off time interval is subject to minimum and maximum limits established by the operator. The program will turn such a group off at the time specified in the list and then turn it back on after the calculated off time interval has elapsed.

The control lists may be initiated by a manual operator action, by an operator-entered load curve, by a discrete input received from the substation injection unit SIU or by a combination of analog inputs from the substation injection unit SIU. The control lists may be load dependent or load independent, and may run on particular days of the week, weekends, holidays or any desired combination of same.

III. MCS Software

The software program for the master control station MCS consists of three basic functional portions. The first portion, which may be referred to as the operator interchange module, handles the interaction between the system and the operator including control of the keyboard and generation of displays on the CRT. The second portion, known as the load profile module, monitors the control lists by periodically, for example, once a minute, checking to see whether any of the lists should be started or stopped, or if a group control command should be sent to a substation injection unit SIU. The third portion of the program, known as the line protocol module (which runs most of the time), handles the communications between the master control station MCS and the substation injection units SIU. Between injections of group control commands, the master control station MCS routinely polls each substation injection unit SIU for status information and telemetry data. It also checks each substation injection unit SIU for eight internal status conditions and monitors the status of eight customer discrete inputs and one analog input. Between the polling of each substation injection unit SIU, the MCS updates the display that is currently on the CRT.

Referring now to Figure 6, a block diagram illustrates the software interaction of the various modules with various hardware which together comprise the master control station MCS. The operator interchange module is indicated by reference numeral 400 and handles the operator inputs from keyboard 404 while generating a display on CRT 402. While being the largest module in the system, it runs on a very low priority. The inputting of parameters through keyboard 404 or the generation of displays for CRT 402 is accomplished through the use of a System Menu which is a list of items that will direct the computer to the area the operator would like to manipulate. The program is preferably written so that data entry is operator oriented, that is, the computer asks a question by displaying it on the CRT 402 and the operator supplies the answer by typing it in through the keyboard 404. Each operator entry is checked for correctness and appropriateness at the time it is entered to insure the security and integrity of the system. A printer 416 may be connected as an output device to provide a hard copy of the CRT display, if desired.

A real time clock 418 plugs into the programmable computer that forms the master control station MCS in order to provide a real time reference for interrupting the system periodically to perform certain functions. For example, certain software functions are implemented once a minute, certain functions are implemented once every five seconds, and the like.

The data base for the operator interchange module 400 is formed by a control list and command assignment table 406, SIU tables 408 and system status files 410. As the names of the blocks imply, they contain the tables and files that other modules manipulate and provide means with which the other modules can communicate information. The tables 406 and 408 and files 410 together may be referred to as the system files module and information is stored therein pertaining to the substation injection units (SIU), the analog and discrete inputs, the control lists, the group elements, the CRT displays and the like.

Another program known as the initialization module and indicated in Figure 6 by reference numeral 414 is run immediately after the program tape is loaded into the computer in order to establish the data base. Initialization module 414 initializes the hardware interfaces connected directly to the computer and generates master clear commands for the substation injection units which are transmitted by the line protocol module 428. This program is normally run only once per program load, and is connected to a tape drive 412 which stores the operator-entered information in the event of a temporary power outage.

The load profile module is indicated by reference numeral 420 and handles activation, running and deactivation of the control lists. Module 420 also manipulates the analog and discrete inputs as read from analog and discrete input tables 424, as well as information stored in a load profile table 422. Load profile module 420 calculates and controls the type 3 control list off-time intervals. Module 420 is run periodically, e.g., once a minute, based upon timing information received from real time clock 418. Control list information to load profile module 420 is fed from control list table 406. Module 420 goes through each list in turn: if the list is disabled, it will go on to the next list; if the list has been enabled by the operator, module 420 will check the various parameters to see if activation or deactivation of the control list is called for. Module 420 then examines the group control commands within those lists that are activated and, if there is a time match, module 420 takes the group control command information and places it on a command stack 426 which acts as a buffer area for the line protocol module 428 for subsequent transmission to the substation injection units.

As explained above, for a type 3 control list, the load profile module 420 calculates a new on-to-off ratio at the beginning of each cycle based upon the current value of certain system parameters, which typically include total system demand. Such information may be obtained by load profile table 420 from information previously stored in the analog and discrete input tables 424, which information is obtained from either analog inputs and/or discrete inputs located at the substation injection units SIU. Alternatively, in the event the particular system installation is not provided with analog or discrete inputs, type 3 lists can still be controlled by information previously stored in load profile table 422 which, in essence, is a tabular listing of the anticipated megawatt demand on an hourly basis. The load profile table 422 can be updated by the operator via operator interchange module 400 at any time.

Whether utilizing the load profile table 422 or the analog and discrete input tables 424, the on-to-off time ratio is related to the desired system parameter of the utility by a graph such as that illustrated in Figure 22. The off-time interval is indicated on the Y-axis and is directly related, over a limited range, to the network demand in megawatts on the X-axis. For each type 3 control list, the operator enters the demand at which he wants the control list to become active (the activate point) and the demand at which the group in the list would be turned off for the maximum off-time interval (the maximum off point). The off-time interval may be calculated by the equation:

$$Y = \begin{pmatrix} \text{max off} \\ \text{time} \\ \text{interval} \end{pmatrix} \cdot \begin{pmatrix} \dfrac{X \text{ (in MW)} - \text{Activate Point (in MW)}}{\text{Max Off Point (in MW)} - \text{Activate Point (in MW)}} \end{pmatrix}$$

for values of X that are greater than or equal to the activate point. The value Y will be rounded off to the closest integer and will be used as the off-time interval subject to two conditions: first, the minimum off-time interval is the cycle duration divided by the number of load control groups in the list and must be at least, for example, four minutes long; and, second, the maximum off-time interval is less than or equal to the limit defined by the operator. Otherwise, the off-time interval can vary by one minute increments as the load varies.

For values of X that are greater than the maximum off point, the off-time interval will be fixed at the upper limit defined by the operator. When the value of X has dropped so that it is between the deactivate point and the activate point, the off-time interval will remain at the minimum off-time interval. When the value of X falls below the deactivate point, the program will send commands to turn on all load control groups in the list and then deactivate the list.

As stated above, for any group control command for which a time match is determined in load profile module 420, the latter transfers the command to the command stack 426. If at any time there is insufficient room on command stack 426 for the load profile module 420 to put on a group control command, the operator will be notified by an alarm message, and the module 420 will try to place the group control command on the stack 426 again after a one minute delay.

The purpose of the line protocol module 428 is to process group control commands on the command stack 426, transmit messages to and receive messages from the substation injection units, poll the substation injection units for status conditions, retrieve substation injection unit analog and discrete inputs, and maintain communicatio and injection error statistics.

When the line protocol module 428 runs, which may be, for example, once every five seconds, it will first check the command stack 426. If there are no group control commands on stack 426, the line protocol module 428 will begin a polling sequence in which all substation injection units (SIU) will be requested to report their status and analog and discrete inputs, one SIU at a time. The received data will be used to update the system files 410. Further, the SIU status indicators will be checked for any changes or alarm conditions. If an alarm condition is detected, an alarm status flag will be set so that an alarm display will be generated by the operator interchange module 400. Any new analog or discrete inputs will be fed to the analog and discrete input tables 424 from line protocol module 428. If any of the analog or discrete inputs have changed and represent an alarm condition, an alarm status flag will be set. When the polling of all SIUs is completed, line protocol module 428 will return to check the command stack 426 once again.

If there is one or more group control commands on stack 426, line protocol module 428 will try to combine the 40 pulse code injection messages. If the commands cannot be combined, the module 428 will send them in order of the priority of the control list from which the commands came.  Transmission of the pulse code injection
messages follows the setup-verify-execute sequence
described hereinabove.  That is, the pulse code injection
message is first set up in each substation injection
unit and verified, one at a time.  After verification, a
commence keying command is sent twice to all substation
injection units for communications verification. The
commence keying command initiates the pulse code injection process at the substation injection units which
takes, in the preferred embodiment, approximately 94
seconds to complete plus a 94 second false start time,
for a total of from two to three minutes per injection.
An interface module 430, known as an RS-232, is disposed
between the line protocol module 428 and a modem 431
which converts commands from the computer into signals
for transmission on the telephone lines by the modem.
After injection has been completed, the line protocol
module 428 obtains the injection code from a special
receiver in each substation injection unit that monitors
the pulse code signals going onto the power lines.  The
received code from the special receiver in each SIU must
match the pulse code signal transmitted, or an injection
error is noted for that SIU.  If an injection error is
noted, the same message is re-injected.  If two consecutive
errors are noted, the particular SIU is disabled and an
alarm indication is given to the operator.

After an injection message is set up by the line
protocol module 428, the latter will update the status
of the load control groups involved in the particular
message.  This is done so that the operator interchange
module 400 can periodically write the current control
list and group status on the system tape 412.  The line
protocol module 428 will also deliver to an archival
tape module 440 the load control group commands involved
in this message so that the archival tape module 440 can write the commands on a separate tape drive unit 442 for archival storage purposes.

The line protocol module 428 also maintains the communication and injection error statistics. Several sections of the line protocol module 428 function like I/O drivers. All communications line messages are handled by the message as opposed to by the character (a message comprises several characters). This allows the line protocol module 428 to stop running until the transfer of the entire message is completed so that other program modules are able to run while the line protocol module 428 is stopped. However, when message transfer is complete, the RS 232 interface 430 interrupts the MCS to initiate running of the line protocol module 428 once again. The latter will then check the received message for errors, update the SIU status, analog and discrete files, and the like. It stops running when another message transfer begins to allow the previously interrupted module to continue. The real time clock 418 together with the interface 430 restarts the line protocol module 428 in the event the message transfer is incomplete.

The MCS analog and discrete input module 432 is optional and is required only when there may be analog or discrete inputs connected directly to the MCS. When module 432 runs, it works together with the analog and discrete input interface tables 424 to bring in the current values of the inputs. It will then update the analog and discrete files in the system files 410 in the same manner as the line protocol module 428 does with the SIU analog and discrete inputs. Reference numeral 434 indicates a standard interface bus utilized with the module 432.

The SCADA module 436 is also optional and comprises a supervisory control and data acquisition system, which is a higher level computer that can control the MCS. A command interface 438 may be required for SCADA module 436.

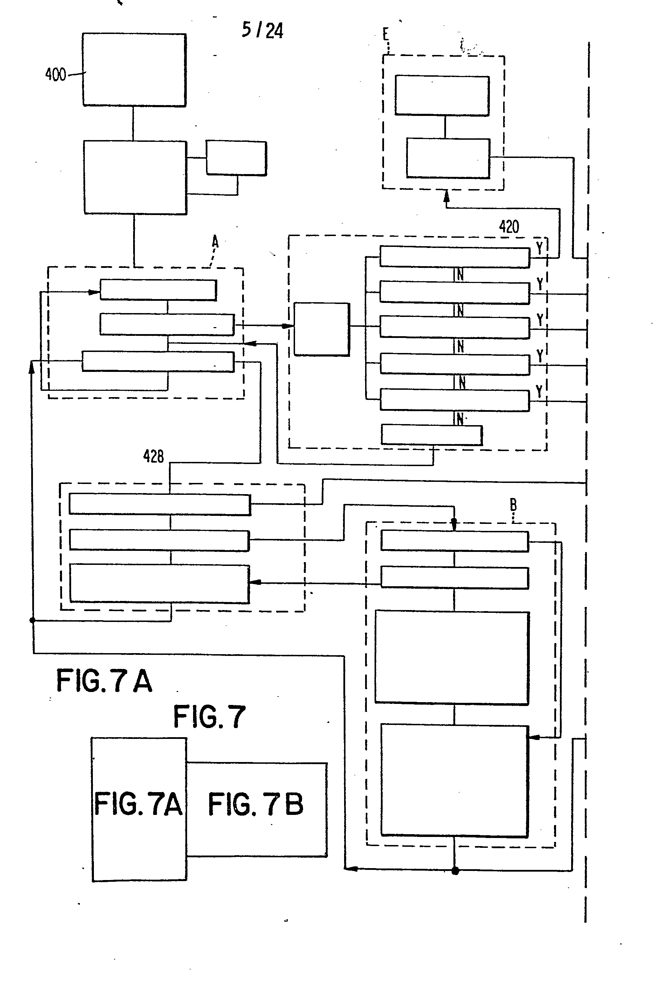

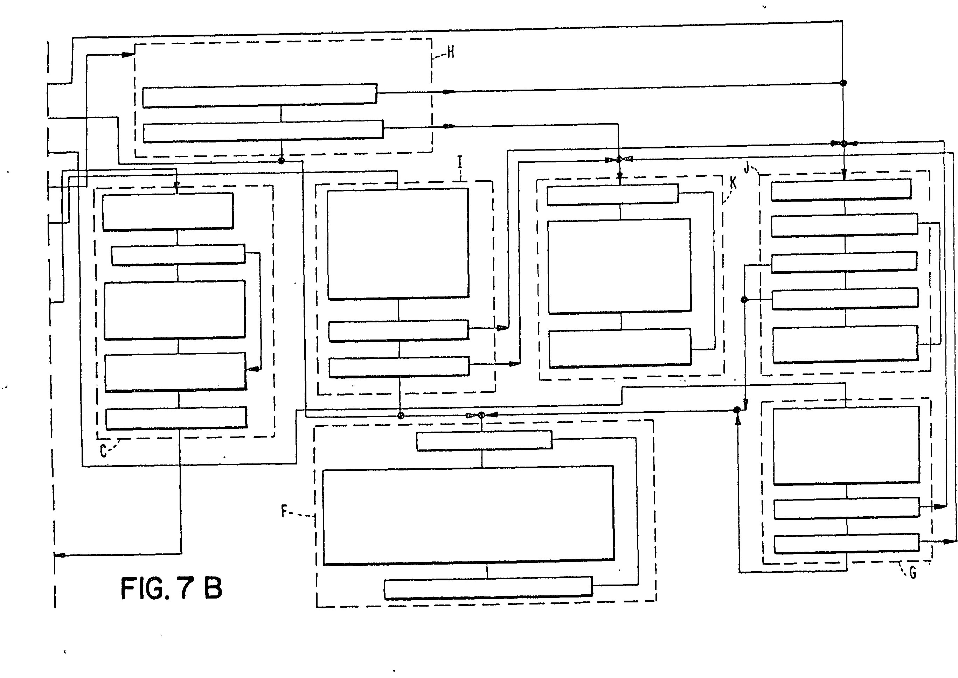

The system software is illustrated in flow chart form in Figure 7. In the flow chart of Figure 7, reference numeral 414 refers again to the initialization module wherein the data base is established, initialized and updated from the previously stored information on tape drive 412. Further, in the initialization module 414, the difference between the current time and the time the last record was written on the system status files 410 is determined. If greater than a predetermined time interval, the operator is asked to enter the new date and time, and the last known list and group status are displayed. The main program is then loaded from the tape drive 412, and the display loop DL is entered.

In the display loop DL, if an alarm condition is indicated the alarm display is generated. If no alarm condition is present, the requested display is generated, and the program moves on to the clock interrupt cycle A.

In the clock interrupt routine A, the current date and time are obtained from the real time clock. If the latter has changed to the next minute, the program loops to the load profile module 420. If not, clock interrupt A checks to see if it is time to go to the line protocol module 428. This may be determined, for example, by a five second internal counter which is decremented to zero.

As pointed out above, the line protocol module 428 is run once every five seconds, and is therefore the highest priority routine in the program. The line protocol module 428 first tests to see if it is time to check an in-progress injection. If it is, the program loops to routine C which first obtains the last injection code from each substation injection unit. This information is obtained from the special receiver in each SIU. A comparison is then made between the received SIU injection codes and those transmitted to determine if there are any errors. If so, an injection error is indicated. If there are no errors, the group control command that made up the injection is removed from the command stack 426. The status tape file is then updated with the current list and group status whereafter the time is set for the next injection (approximately 94 seconds later), and the five second counter is reset to establish a new time for checking the line protocol module 428.

If it is not time to check an in-progress injection, the line protocol module 428 checks to see if it is time to start a new injection. If so, the program loops to routine B where there is first a test to see if there are any injection errors. If there are none, routine B checks the command stack 426 to see if it is empty, that is, to see whether or not there are any group control commands awaiting transmission. If not, the line protocol module 428 polls the injection substation unit, updates the analog, discrete and internal status files from the polling response, and resets the five second counter in clock interrupt A.

If there is one or more group control commands on the command stack 426, routine B first eliminates any duplicate group control commands, obtains the preselect code of the oldest command, looks for other group control commands with the same preselect code, and combines commands with the same preselect. The injection message is then generated and sent to each substation injection unit that is on-line and enabled. Routine B then verifies the injection message, and upon verification, sends the commence keying command to all SIUs. Thereafter, routine B sets the time for checking this injection (approximately 94 seconds later) and sets a new time to check the line protocol module 428.

Referring back to the clock interrupt routine A, if a minute change has gone by, the program cycles to the load profile module 420 wherein the first action taken to to determine the source of the list. If the list source is a Manual Key on the keyboard, the program cycles to routine E to determine if the particular control list is active. If it is not, the rest of the control lists are checked and the cycle returns to the load profile module 420. If the particular control list indicated by the Manual Key is active, the program cycles to routine J which is an "activate" routine common to all lists found active. In routine J, the first determination is the days that this particular list is allowed to run, and the type of day that today is, that is, whether today is a weekday, Saturday, Sunday or holiday. It is then determined whether this particular list is allowed to run today. If it is not, the rest of the control lists are checked and the routine returns to the load profile module 420. If the list is allowed to run today, the list is then checked to see whether it is already active, and, if it is not, the list is set active and the program cycles to routine F. If the list is active, the current time is obtained, and, if the list is a type 3 list, the new off-time interval is calculated. Each group control command in the list is then checked for a time match. For each time match found, the corresponding group control command is placed on the command stack to await transmission via the line protocol module 428. If the list is a type 3 list, the time is adjusted to turn the group back on or off. The remaining group control commands in this list are similarly checked, after which the rest of the control lists are checked.

Routine F is also the routine which is enabled if the list source is from the Dump, Reduce or Restore Keys on the keyboard. The lists assigned to the Dump, Reduce and Restore Keys are normally used for emergency situations only, and therefore have priority over other load management functions in the system. Within these three manually-initiated actions, the Dump list has priority over the Reduce list and the Restore list, while the Reduce list has priority over the Restore list. All lower priority lists are disabled when one of these lists is initiated by pressing the corresponding key. Further, all entries that are currently on the command stack are removed.

Returning to module 420, if the list source is the load profile table, the program cycles to routine G wherein values are obtained from the load profile table for this hour and for the next hour. The values are then linearly interpolated to obtain a value for the present minute. If this value is greater than or equal to the activate value for this list, the program cycles to the activate routine J. If the interpolated value is less than the deactivate value for this particular list, the program cycles to the "deactivate" routine K.

In routine K, if the list is currently active, all of the ON group control commands in the list are placed on the command stack, and the list is then set inactive.

Referring back to routine G, if the interpolated value is greater than the deactivate value but less than the activate value, the program cycles to routine F which was explained above.

If the list source on load profile module 420 is a discrete input from the substation injection unit, the program cycles to routine H wherein the contact number for this list and its current status is obtained. If the status of the contact number is correct to activate the list, the program cycles to routine J. On the other hand, if the status is correct to deactivate the list, the program cycles to routine K. Otherwise, the program cycles to routine F where the group control commands are tested for a time match and placed upon the command stack.

If the list source in the load profile module 420 is from an analog input, the program cycles to routine I wherein an analog input number is obtained for the list along with its current value for all analog inputs. The appropriate value is then calculated (average, summation or RMS), and the value is tested to see if it greater than or equal to the activate value, or if it is less than the deactivate value. If the former is true, activate routine J is enabled, and if the latter is true, deactivate routine K is enabled. If the value is between the activate and deactivate points, routine F is enabled.

Not shown in Figure 7 are the Menu Key routines which permit the operator to select a display indicator or enter system parameters according to the system menu, as well as the Keyboard Interrupt routine which allows input from the keyboard.

IV.  Substation Injection Unit

A.  Overall Block Diagram

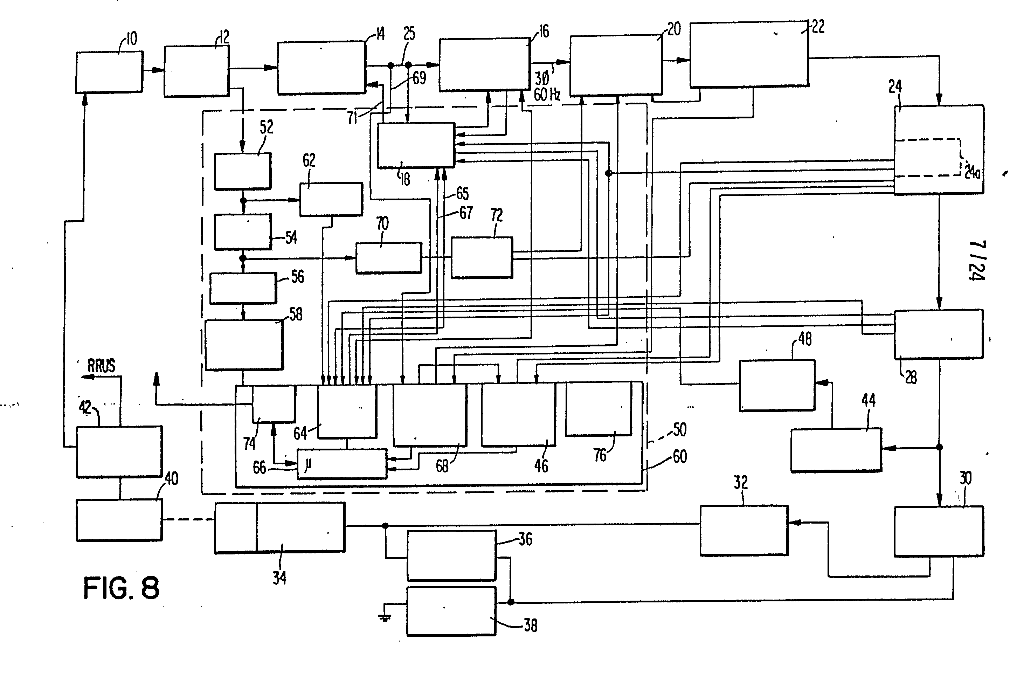

Referring now to Figure 8 , there is illustrated a functional block diagram of a preferred embodiment of a substation injection unit in accordance with the present invention. Power is fed to the substation injection unit from the main power bus 42 of the power utility's substation, which is of the 15 kilovolt class. Bus 42 also transmits the utility's power to the remote receiver units RRU. A power supply for the substation injection unit is indicated by reference numeral 10 and supplies, for example, 15 kilovolts, 60 Hertz, 240 volt, 36 amp, three-phase three wire power to a line terminal board 12 to which the interconnect cables for the interior of the substation injection unit are connected. From board 12, power is fed through a power circuit breaker 14 which has a shunt trip input 71 that is activated in a manner which will be described in greater detail hereinafter. Three-phase power is fed along line 25 from power breaker 14 to a 60 Hertz power input contactor 16. Contactor 16 connects the incoming power to a rectifier 20 under the control of control relay circuit 18, in a manner which will be described in greater detail hereinafter.

Rectifier circuit 20 comprises a standard SCR phase-controlled rectifier bridge under the control of a rectifier controller 68 in a manner to be described in greater detail below. Rectifier 20 acts to change the incoming three-phase AC power into a DC level at its output of approximately 325 volts. It should be noted, however, that the DC voltage level output of rectifier 20 may be adjusted to deliver one of a number of suitable output DC voltages by means of adjusting the firing angle of the silicon-controlled rectifiers (SCRs).

The DC output from rectifier 20 is then fed to an LC output filter 22 that smooths the AC ripple on the DC voltage. Also noted in box 22 is an inverter fault detector which basically detects what is known as a shoot-through condition in the inverter 24 that creates a short on the DC bus. The fault detector in block 22 acts to provide an alternate path for any surges in order to prevent the rectifiers in the inverter from being burnt out. Shoot-through conditions are also noted in the rectifier controller 68, in a manner which will be described more fully below.

Also positioned in block 22 is an overcurrent sensor which simply senses excess current on the DC line and, upon such detection, acts to disable the SCRs in rectifier 20 to prevent damage thereto.

Reference numeral 24 indicates a three-phase static inverter which is preferably of the form known in the art as a McMurray inverter. Inverter 24 converts the incoming DC voltage and current to AC voltage and current at a frequency which corresponds to the desired preselected pulse code frequency. By way of example, the pulse code frequency may be selected to be 340 Hertz. The presence or absence of a particular pulse in the 340 Hertz output of inverter 24 depends upon inputs received from inverter controller 46 which basically turns on and off the SCRs in inverter 24 in accordance with the specific pulse code signal desired for a particular injection message.

Inverter 24 operates in one of three modes under the control of inverter controller 46. One mode may be denoted the OFF mode wherein none of the SCRs in inverter 24 are conducting. Another mode may be described as the INJECT mode wherein the SCRs of inverter 24 are being turned on and off in a specific sequence to create a pulse code pattern at 340 Hertz that corresponds to the desired injection message communicated to inverter controller 46 by microprocessor 66, in a manner which will be described in greater detail hereinafter. A third mode may be denoted the IDLE mode and corresponds to those periods of time when no output pulse is present in the pulse code train. During IDLE, the lower three SCRs in the SCR bridge of inverter 24 are conducting which provides a continuous short circuit on the primary of injection transformer 30 to serve as a trap circuit for the 60 Hertz backfeed current. The SCRs in inverter 24 are sized to handle the combined current requirements of the ripple or injection frequency current and the desired amount of 60 Hertz backfeed current. Back feed current is the 60 Hertz current which flows through the output circuit of the inverter. The SCRs in inverter 24 operate under forced commutation as controlled by inverter controller 46.

From the inverter 24, the 340 Hertz pulse code signal is fed through three-phase injection frequency tuning capacitors 26 which are analogous to power factor correction capacitors used to correct for lagging currents and to minimize the kilovolt requirement of the inverter. The source of possible lag is the load applied at the substation bus 42 as it would appear to the injection frequency of 340 Hertz.

From tuning capacitors 26, the pulse code signal is fed through a power output contactor 28 which is under the control of control relay circuit 18, as is power input contactor 16. When the main power breaker 14 opens, power is removed from input and output contactors 16 and 28, respectively, via control relay circuits 18 to immediately isolate the SCRs in rectifier 20 and inverter 24 against damage. The status of input and output contactors 16 and 28 is fed to a system status board 64, as will be described in greater detail hereinafter.

The coded injection message from output contactor 28 is fed to the primary of an injection transformer 30 which performs two functions. Firstly, transformer 30 steps up the relatively low voltage and current from inverter 24 to a relatively high voltage and current compatible with the power line and thereby isolates the pulse code generator (consisting of rectifier 20 and inverter 24) from the power line 42. Transformer 30 also has its secondary connected to deliver the 340 Hertz alternating current signal to the injection inductors 32 and injection capacitors 34. Inductors 32 and capacitors 34 are tuned to provide a series circuit resonant at the desired pulse code frequency of 340 Hertz. Surge protection arc gaps 36 are connected across the injection inductors 32 and the transformer winding to the neutral to provide surge protection when the injection inductor 32 and capacitors 34 are connected to the substation bus 42. That is, a surge current can create an overvoltage on the inductors 32 and the arc gaps 36 are used to limit that voltage.

The substation injection unit runs with an isolated neutral; however, it is desirable to limit its relationship to the system neutral, and this function is performed by a neutral shift arc gap 38. That is, if the system neutral or the substation neutral shift too far with respect to one another, the neutral shift arc gap 38 will fire to hold them in a fixed voltage relationship.

From the inductors 32 and the capacitors 34, the 340 Hertz pulse code signal is applied through disconnect devices 40 which may be, for example, simple disconnect switches or a mechanized switch utilized to switch capacitor banks on and off the line. From there, the pulse code signal is applied to the substation bus 42 to be sent to the remote receiver units along the power lines.

The output from power output contactor 28 is also fed through current transformers 44 to a neutral shift detector 48 which acts to indicate when the power system neutral has shifted sufficiently to cause improper operation of the substation injection unit. Such a shift can be caused by, for example, a line-to-neutral or line-to-line fault which, if not cleared sufficiently rapidly, causes neutral shift detector 48 to function to disconnect the substation injection unit from the power line via system status board 64, control relay circuits 18, power breaker 14 and contactors 16 and 28.

Reference numeral 50 indicates generally the control logic for controlling the function and operation of the circuits described hereinabove in the substation injection unit. Single phase power is fed from terminal board 12 into a trip breaker 52 and then through an electromagnetic interference filter 54 which eliminates some of the transients and higher harmonics being supplied to a transformer 56. Transformer 56 steps down the voltage level to one usable by direct current power supply 58 which may be, for example, approximately 120 volts. Power supply 58 supplies direct current power to the control and communications module 60.

When the substation injection unit is transmitting a pulse code signal through the substation bus 42, part of that signal is fed back through the customer's power supply 10 down through terminal board 12, trip breaker 52 and may be detected by a pulse detector 62. Pulse detector 62 preferably comprises a modified remote receiver unit which is designed to detect, on a pulse-by-pulse basis, the pulse code signal impressed upon the power lines. The output of pulse detector 62 is fed to the system status and I/O board 64 in the control and communications module 60. With respect to this information, system status board 64 is used to confirm that the ripple tone or pulse code signal is being applied to the system.

The heart of the control and communications module 60 is a microprocessor 66 which may, for example, comprise a Motorola 6800 chip. The microprocessor 66, which can be denoted as a communications controller, performs several functions. For example, the pulses from the pulse detector 62 are fed to microprocessor 66 through system status board 64 for counting, storing, and transmission back to the MCS for comparison with the desired injection message sent to the substation injection unit by the master control station. This information is transmitted via a modem 74 that is connected to the telephone lines that are connected to the modem in the master control station. The microprocessor 66 stores the pulses received from pulse detector 62, on a pulse-by-pulse basis, and then transmits the complete 40 bit pulse code message back to the master control station where verification is made.

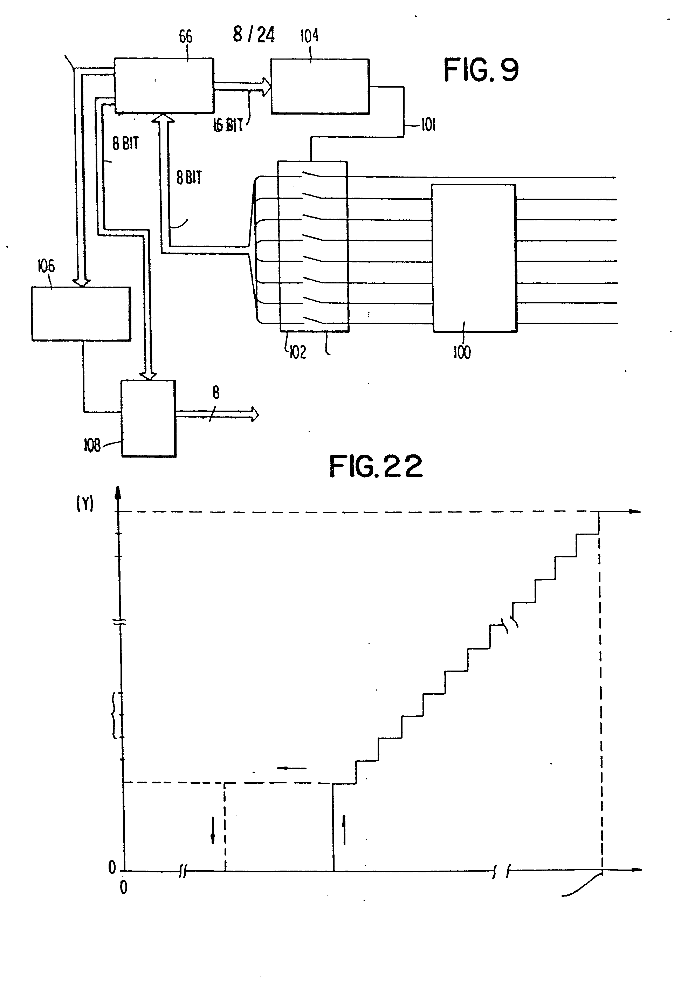

One function of the system status and I/O board 64 is to link and isolate the low level electronics portion of the control logic section 50 from the nominal higher voltage circuits in the substation injection unit. A block diagram of the system status and I/O board 64 is illustrated in Figure 9 in combination with the microprocessor 66. The inputs to microprocessor 66 are received by the board 64 through a high voltage interface circuit 100 which converts the nominal 220 volt inputs to 5 volt logic level. In a preferred embodiment, seven such inputs are provided through high voltage interface 100. As explained above, one of the inputs is from pulse detector 62. A second input is from the neutral shift detector 48. Another pair of inputs are provided from two relays in control relay circuit 18, while yet another pair of inputs are provided from temperature detectors 24a to be described below. From the high voltage interface 100, the low level logic signals are fed to a latch 102 having a chip enable input 101. Chip enable input 101 to latch 102 is provided by an address decoder 104 which receives a 16 bit address signal from the microprocessor 66. When the right address is detected in decoder 104, the chip enable output 101 goes high to latch the data through latch 102 to be delivered to the input of the microprocessor 66 via an 8 bit data bus.

Outputs are transmitted from the microprocessor 66 in a similar fashion. That is, a 16 bit address bus feeds an address to an address decoder 106 which, upon detection of a proper address, causes a chip enable output 107 to go high to actuate latch 108 to receive the eight bits of data from microprocessor 66 to be sent to the desired output. For example, when it is desired to open or close the input contactors 16 and the output contactors 28, an appropriate address and data is sent from the microprocessor 66 through the output latch 108 to deliver the control signals to the control relay circuits 18.

Microprocessor 66 communicates with rectifier controller 68 and inverter controller 46 in a similar manner utilizing, of course, different address codes on its output address bus to address the particular controller desired.

Referring back to Figure 8, it is seen that three-phase power is supplied to rectifier controller and gate generator 68 via line 69. The three-phase, 60 Hertz supply to rectifier controller 68 along with output voltage level commands from microprocessor 66 allows the controller 68 to establish a predetermined voltage level which must appear on the SCRs before they can be fired. This information provides a reference point for controlling the firing time of the SCRs of the rectifier. The firing time determines the level of output power. The master control station permits selection through microprocessor 66 of one of a plurality of desired output voltages for rectifier 20 which may comprise, for example, a high, medium and low voltage. The firing time that the SCRs in rectifier 20 are fired depends upon the selected output voltage level and is controlled by rectifier controller 68, in a manner to be described in greater detail hereinafter.

Reference numeral 24a indicates a pair of temperature rise detectors located in the inverter 24. One of the detectors is positioned adjacent the SCRs to detect an initial or low threshold of temperature. Upon reaching the initial threshold, a signal is transmitted to system status board 64 in control module 60 where it is transmitted back to the master control station through the microprocessor 66 to indicate that the maximum operating temperature of the substation injection unit has been reached. This permits corrective action to be taken at the master control station. The other temperature detector operates at a higher temperature threshold. When the high threshold is reached, a signal is sent directly to the control relay circuits 18 to operate the shunt trip via line 71 in power breaker 14 to immediately disable input contactor 16 and output contactor 28 to isolate the substation injection unit and render same incapable of further transmission. This signal is also transmitted through the control relay circuit 18 to the microprocessor 66 via line 65 and thereafter to the master control station to indicate an alarm condition. Line 65 consists of four lines between system status board 64 and control relay circuits 18. Control relay circuits 18 comprise a pair of relays to operate input and output power contactors 16 and 28, respectively. Further, the status of contactors 16 and 28 is periodically polled and reported to the master control station through system status board 64 and microprocessor 66.

A transformer 70 is connected to receive power from filter 64 and changes the line voltage to a desired level to operate a pulse gate power supply 72 which provides DC power for rectifier 20 and inverter 24.

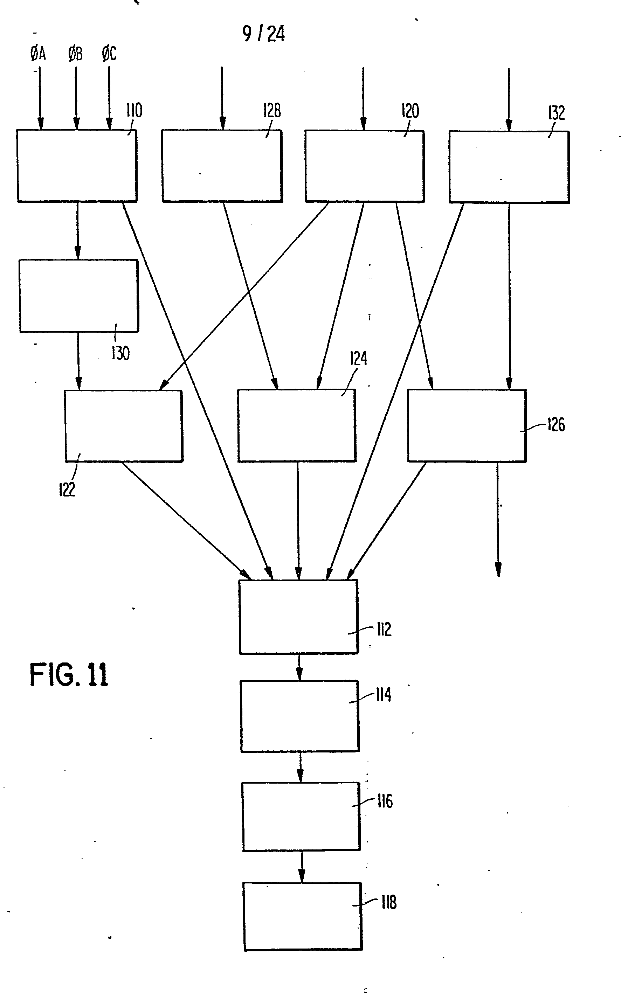

Reference numeral 76 in control and communication module 60 refers to optional boards which may be provided in the substation injection unit to monitor analog or discrete data for feeding back system parameters to the master control station. For example, one analog input may be a direct current signal proportional to the system load which can be utilized in the load management system for the type 3 control lists. Alternatively, the demand information can be, for example, the inputs from kilowatt-hour meters where the input is dry contact closures on the lines which are attached to switch on the meters. The rate at which the switching operations occur are indicative of demand, and the total number of contact closures is proportional to the kilowatt-hours consumed. Referring to Figure 10, meters A and B each have a pair of dry contacts which close every time the meter turns to produce a pulse from the high voltage interfaces 140 and 150. The outputs from high voltage interfaces 140 and 150 are fed to a pair of timers which may be located, for example, in a timing chip 160 (such as Motorola's 6840). Timer 1 in the chip 160 is loaded with a number from microprocessor 66, which, for example, is equivalent to five minutes. A 60 Hertz clock signal causes timer 1 to decrement. At the end of five minutes, the microprocessor 66 reads the present count in timer 2 and subtracts it from the previous count, which is equal to the total number of pulses in that time interval which is loaded into a RAM location 170. The same operation is performed with timer 3. The numbers are fed to a stack of memory locations in RAM 170, and, when an hour has elapsed, and the master control station calls for an analog value, the microprocessor 66 sums everything in the two RAM stacks and sends it to the master control station which then calculates the demand per hour.

### B.   Rectifier Controller

There is shown in Figure 11 a functional block diagram of the rectifier controller. The rectifier controller utilizes voltage sensors 110 to detect the more positive voltages by comparing the instantaneous magnitude of phase voltages A, B and C from the three-phase power grid. The phases of the three voltages must be rotating positively from A to B to C. The voltage sensors 110 produce outputs whenever one line is positive with respect to another line with which it is compared. The voltage sensors are connected to the SCR enabling logic 112 in order to determine the firing order of the SCRs.

The same information required for determining the firing order is fed to a dwell start detector 130. The dwell start detector is responsive to the outputs of voltage sensors 110 to produce an output whenever any two of the three-phase voltages are equal.

A delay register 122 is responsive to the dwell start detector 130 output and to time delay information from a decoder and counter 120 which receives output voltage signals from the microprocessor. If the time delay received from decoder 120 is zero, then the delay register 122 will immediately enable logic 112. When this condition exists, the rectifier will produce a full power output. The reason for this is that, in this event, the SCR enabling logic 112 will be time controlled only by the voltage sensors 110 since there is no dwell time delay. As the length of the time delay increases from zero, the firing of the SCRs will be delayed by the output from delay register 122.

The decoder and counter 120 also provides an input to a mode register 124. This mode register 124 is responsive to a mode command from the microprocessor through decoder 120 to deliver an appropriate signal to SCR enabling logic that is used to initiate and terminate operation of the rectifier controller upon command from the microprocessor or when there are other rectifier controller malfunctions.

During normal operation, the rectifier controller operates in response to commands from the microprocessor which are received by the decoder and counter 120 and in response to the three-phase voltages which are sensed by the voltage sensors 110. The commands from the delay register 122, the voltage sensors 110, and the mode register 124 under normal operation will permit firing of the rectifier SCRs by enabling logic 112.

Connected to the output of the SCR enabling logic 112 are gate pulse generators 114 which are utilized to generate bursts of high frequency pulses which may be, for example, on the order of 50 kilohertz. These pulses are then applied to gate amplifiers 116 which are used to increase the power level and to drive the rectifier SCRs 118. The rectifier SCRs have isolation transformers associated with their gates. These isolation transformers use the 50 kilohertz gate pulse generators 114 to provide the necessary AC gate control signal.

The rectifier controller also has associated with it additional means for controlling the SCR enabling logic 112 which are responsive to conditions on the DC bus. These means are an overcurrent sensor 128 and a shoot-through detector 132.

The overcurrent sensor 128 is placed in the direct current bus and senses a high direct current for sustained periods of time. This sensor may be, for example, a thermally responsive switch which closes to apply a signal to the mode control register 124 which will produce a disabling signal which is received by the SCR enabling logic 112.

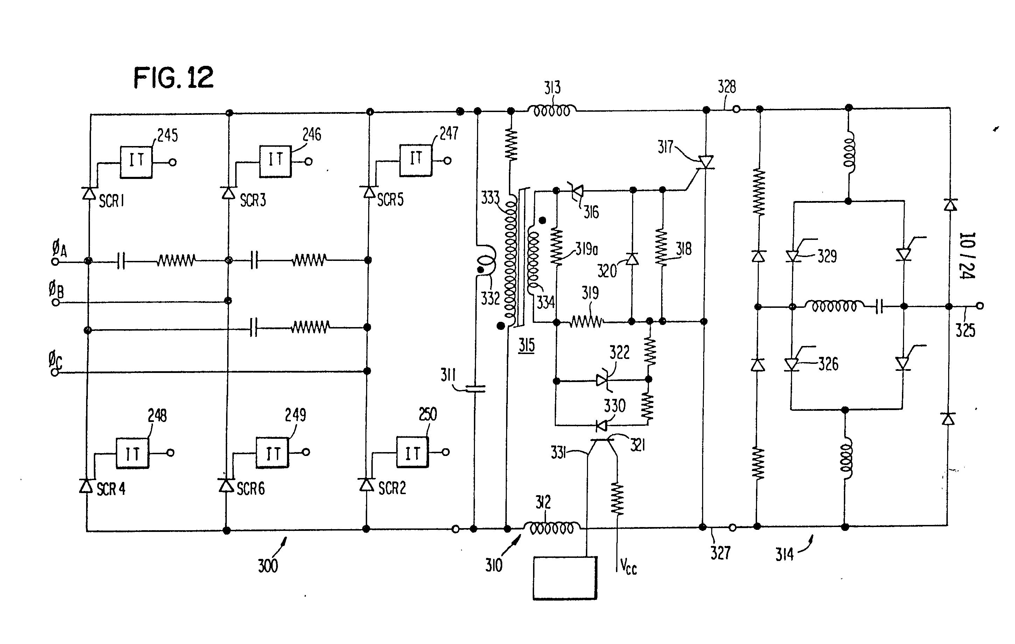

In order to provide for rapid control of the rectifier direct current output voltage when a shoot-through occurs in the SCRs associated with the inverter circuitry, there is provided a shoot-through detector 310 (Fig. 12). A "shoot-through" is the undesirable condition which may occur in the inverter circuit when two series connected SCRs operating on the same voltage phase are simultaneously placed in conduction which produces a short circuit on the direct current. bus. For example, if SCRs 326 and 329 should be on at the same time, the current on the DC bus 327 and 328 will be short circuited through the two conducting SCRs 326 and 329. This will produce a high current in the DC output bus 327 and 328 which is supplied by the rectifier 300 and the capacitor 311. If this high current is not absorbed by some other device, and if the rectifier 300 is not disabled, the inverter SCRs 326 and 329 may be damaged. This holds true for the other two pairs of SCRs of the inverter (not shown).

In order to prevent damage to the inverter SCRs 326 and 329 during a shoot-through occurrence, the fault detector of this invention is placed in the DC bus 327 and 328 between the rectifier 300 and the inverter 314.

As shown in Figure 12, the shoot-through detector 310 has a capacitor 311 placed across the direct current bus and inductors 312 and 313 on the direct current bus. If a shoot-through should occur within the inverter 314, there will be an apparent short circuit on the direct current bus which will cause an immediate discharge of capacitor 311. As capacitor 311 discharges, the current from capacitor 311 will be sensed by a detector in the form of a saturable core transformer 315 having a primary 332, a secondary 334 and a flux reset winding 333. Transformer 315 generates in its secondary 334 a voltage related to the shoot-through current from capacitor 311. Within the transformer secondary 334 there is placed a Zener diode 316 which acts as a threshold device and which permits only voltages above its Zener voltage to be applied to the gate of an SCR 317 and to the loop consisting of resistors 318 and 319.

Saturable core transformer 315 limits the energy delivered to the remaining circuitry and permits good sensitivity without damaging the gate of SCR 317.

-50-

A resistor 319A is placed across the secondary of transformer 315 to provide a current path in parallel with the detector circuit which reduces sensitivity and absorbs energy which is insufficient to overcome Zener diode 316. In this manner, the response of SCR 317 is limited to a predetermined Zener voltage, and likewise the voltage across resistor 319 is controlled. A diode 320 is placed across the gate-cathode terminals of SCR 317 and, along with resistor 318, acts to suppress noise that may induce spurious triggering of SCR 317.

The SCR 317 provides an additional margin of safety to the SCRs located in the inverter 314. SCR 317 will be turned on when the Zener voltage of diode 316 is exceeded. The turning on of SCR 317 essentially short circuits the direct current bus, and takes the current which would otherwise flow to the inverter SCRs 326 and 329. In this manner, the direct current bus is rapidly disabled in response to a shoot-through condition. The shorting of the output direct current bus combined with the disabling of the SCR gates of the rectifier bridge assures that the SCRs 1 to 6 of rectifier 300 will turn off.

The voltage across resistor 319 is applied to an opto-isolator 321 which comprises a light emitting diode 330 and a ligh sensitive transistor 331. Opto-isolator 321 serves to sense the voltage across resistor 319 and to isolate this high power section from any logic circuitry 112 which is connected to the output of opto-isolator 321. Such logic circuitry 112 acts _inter alia_ to disable the SCRs 1 through 6 of rectifier 300. A Zener diode 322 is placed across the opto-isolator 321 which limits the voltage applied to the opto-isolator 321.

signal responsive to the short circuit condition. The shoot-through detector 132 is connected to the SCR enabling logic 112. When such a shoot-through condition is sensed, the SCR enabling logic 112 immediately disables the rectifier SCR gates, and thereby prevents any further power from being applied to the direct current bus during the period of the shoot-through condition. The SCR enabling logic 112 maintains the gates in their "off" condition for a predetermined period of time. This provides time for the inverter to recover from its undesirable shoot-through condition.

Shoot-through conditions may occur randomly in inverter circuits. The shoot-through detector 132 and the SCR enabling logic 112 permit the rectifier to be protected against damage from such random conditions. If the shoot-through condition becomes persistent and repetitive, there may be a serious fault associated with the inverter circuit's rectifiers. In order to determine if such serious and continuous shoot-through conditions are present, there is provided a shoot-through counter 126. The shoot-through counter 126 counts the number of shoot-through detections within a given time interval. When a predetermined number of shoot-throughs is detected within the predetermined period, the shoot-through counter 126 produces a shut down signal which is received by SCR enabling logic 112. The SCR enabling logic 112 will then permanently shut down the SCR gates until a microprocessor-initiated or manually initiated command is received to clear the fault and restart the rectifier. The shoot-through counter 126 also provides fault data supplied to the microprocessor which is used to control the rectifier controller as well as the inverter.

0023254

-52-

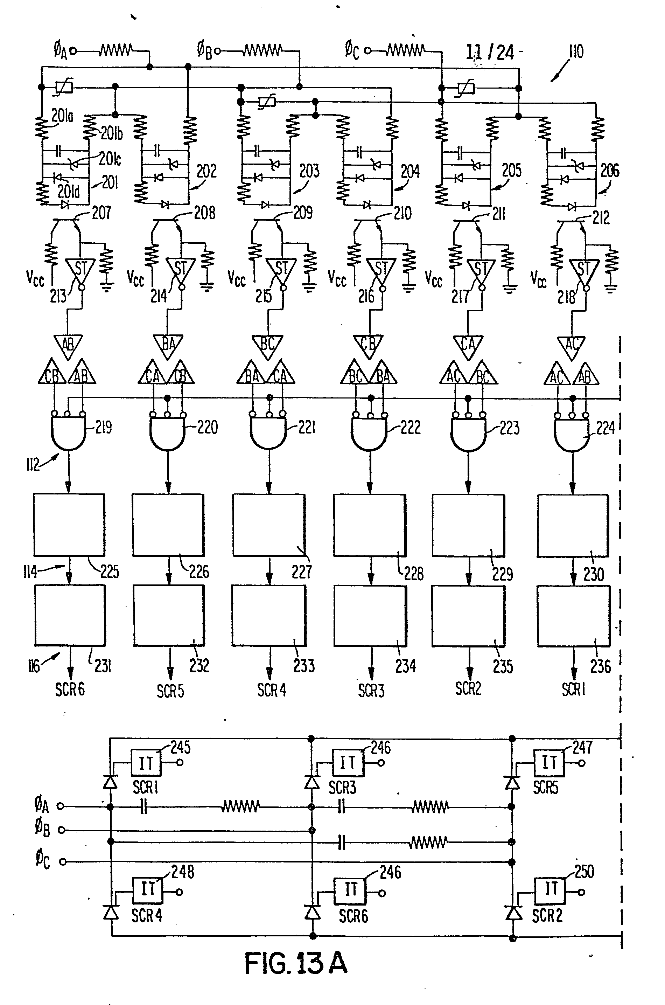

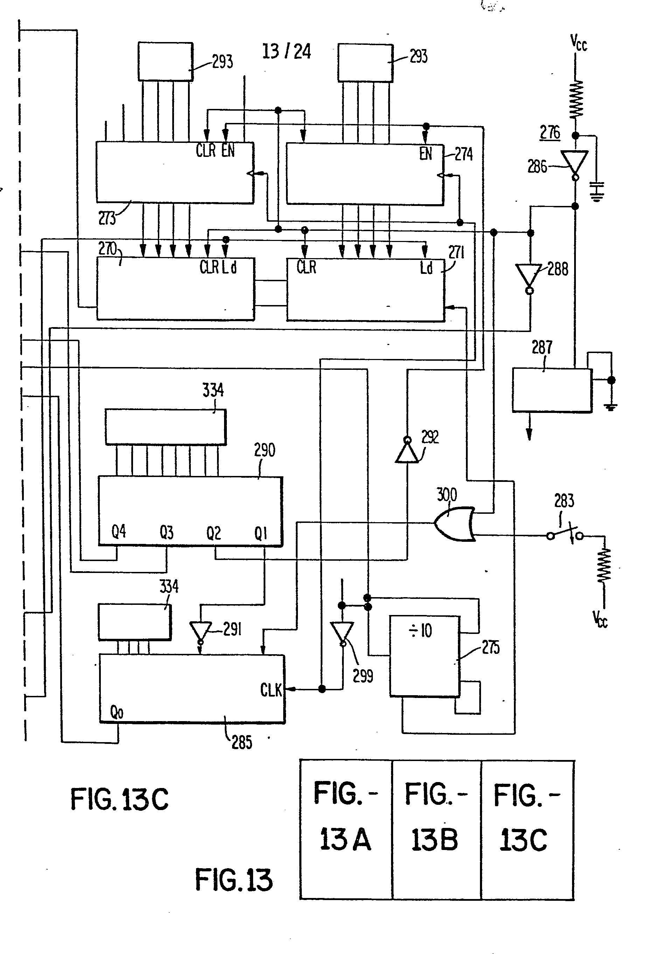

Figures 13A through 13C illustrate the overall schematic of the rectifier controller of the present invention. In the upper portion of Figure 13A are illustrated the voltage sensors 110 which receive the three-phase input voltages A, B and C from the power bus of the utility. In order to provide inputs for the SCR enabling logic circuit 112, the voltage sensors 110 generate logic signals which indicate which phase voltages are positive at any point in time with respect to the others. By way of example, a comparison between the phase voltages A and B is made by voltage sensor 201. When voltage A is positive with respect to voltage B, current will flow through a light emitting diode 201d of an opto-isolator 207 which conducts to deliver a voltage VCC to the input of a Schmitt trigger 213 to fire same. When the Schmitt trigger 213 fires, an output AB is produced which indicates that phase voltage A is positive with respect to phase voltage B. Note that diode 201d will continue to conduct until voltage B is greater than voltage A, i.e., it conducts when A = B. Associated with the voltage sensor 201 are current limiting resistors 201a and 201b and a Zener diode 201c which limits the voltage across the opto-isolator 207.

The voltage sensors for the other possible combinations of three-phase lines are indicated by reference numerals 202, 203, 204, 205 and 206. Similarly, the outputs of these voltage comparisons are shown as BA, BC, CB, CA and AC. Each of these sensors produces an

enabling output when the first indicated voltage is greater than or equal to the second indicated voltage.

As shown in Figure 13A, NAND gates 219 through 224 have inputs connected to the indicated outputs of Schmitt triggers 213 through 218 and will produce the necessary firing information for the SCRs. The inputs to NAND gate 219 include the outputs from Schmitt triggers 216(CB) and 213 (AB). With these inputs, NAND gate 219 will produce an output when voltage B is the most negative of the three-phase input voltages. Similarly, NAND gate 220 will have an output when voltage C is the most positive; NAND gate 221 will have an output when voltage A is the most negative; NAND gate 222 will have an output when voltage B is the most positive; NAND gate 223 will have an output when voltage C is the most negative; and NAND gate 224 will have an output when voltage A is the most positive.

The NAND gates 219-224 are a portion of the logic means for supplying gate control signals to the SCRs 1 through 6. In addition to the information from the voltage detectors 110, there is a third input to each NAND gate 219 through 224, to be described in greater detail below, which further controls the firing time of SCRs 1 to 6.

The outputs of NAND gates 219 through 224 are connected to gate pulse generators 225 through 230. The gate pulse generators may each comprise, for example, 50 kilohertz oscillators which are controlled by the outputs from gates 219 through 224. Figure 13A shows a preferred embodiment of a single gate pulse generator. This gate pulse generator consists of two one-shot pulse generators 238 and 239 and a NAND gate 237 which receives as one input thereto the output from one of the NAND gates 219 through 224. NAND gate 237 provides an input to one-shot 238 which fires for a time determined by capacitor 240 and resistor 241. The output of one-shot 238 is then fed to one-shot 239 which then fires and remains on for a period determined by capacitor 242 and resistor 243. When one-shot 239 returns to its normal state, the output to NAND gate 237 again goes high, and one-shot 238 is again triggered, thereby producing the oscillation required at its $\overline{Q}$ output. The value of capacitor 240, resistor 241, capacitor 242, and resistor 243 are chosen so that the frequency of the oscillator will be approximately 50 kilohertz.

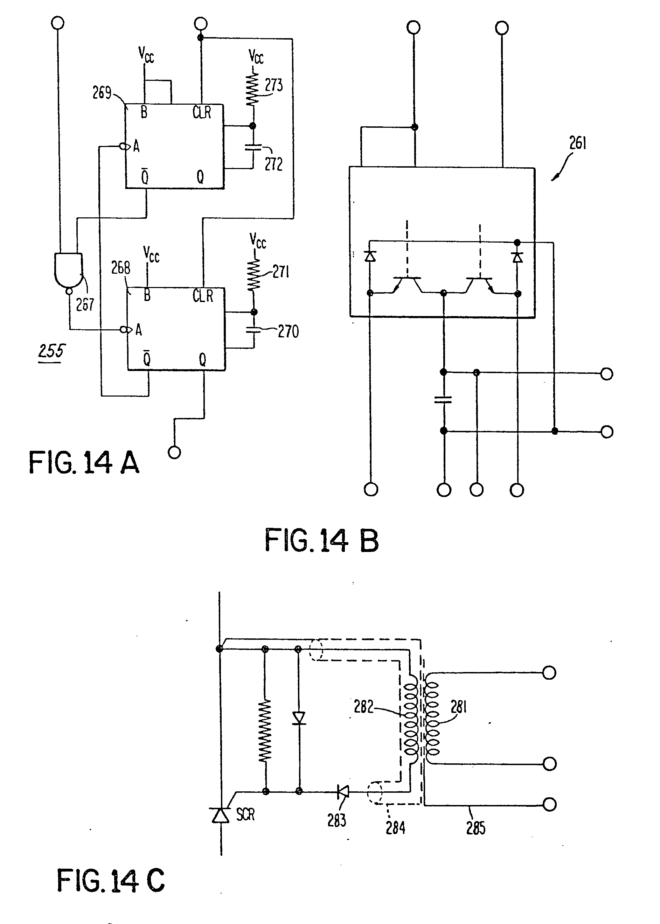

The output of the gate pulse generator of Figure 14A is then applied to a gate amplifier or driver as illustrated in Figure 14B Gate amplifiers 231 through 236 are all the same and preferably comprise integrated circuit transistor amplifiers. The outputs from the transistor amplifiers are then applied to the inputs of the various SCRs through isolation transformers.

The isolation transformers are identified by reference numerals 245 through 250 in Figure 12A. A preferred embodiment of an isolation transformer for the SCR gates is depicted in Figure 13C and has the outputs from a gate amplifier applied to transformer winding 251 to develop a gate output signal on transformer winding 252. A diode 253 is connected in series with the secondary of the transformer 252 to provide rectification of the 50 kilohertz signal which is necessary for proper control of the SCR gate. The isolation transformer also includes a coaxial shield 254 on the secondary and a Faraday shield 255 to prevent triggering of the SCR by noise that can be capacitively fed through the transformer.

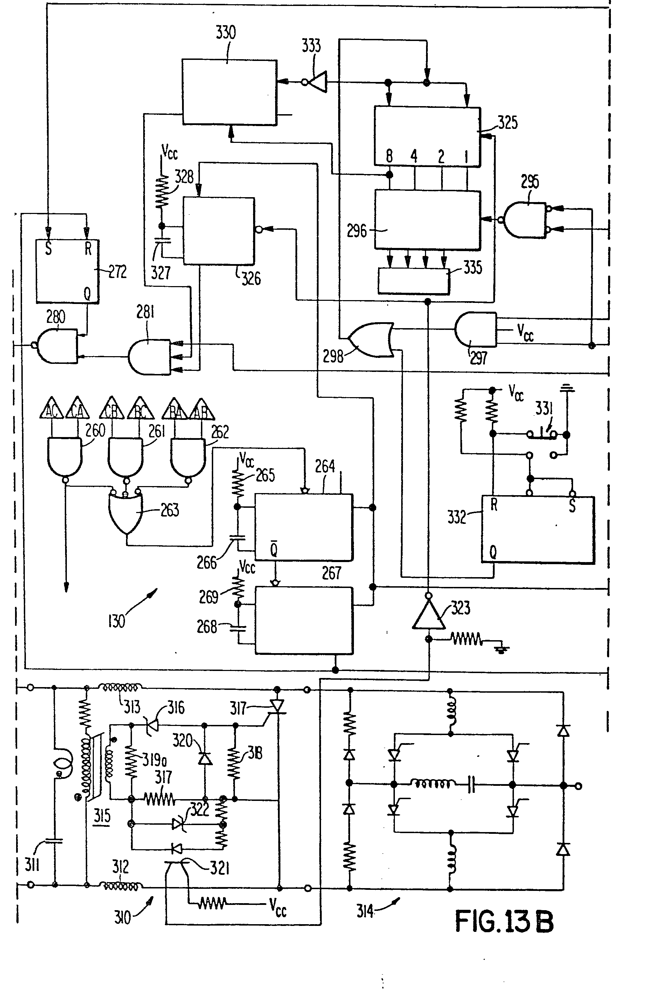

Referring now to Figure 13B, the means for generating a dwell start output signal comprises NAND gates 260, 261 and 262 which serve as a voltage comparing means and whose outputs feed a NOR gate 263. NAND gate 260 is connected to receive the outputs from Schmitt trigger 218 and Schmitt trigger 217. The inputs to NAND gate 260 indicate when voltage A is greater than or equal to voltage C and when C is greater than or equal to voltage A. The only time it is possible for both inputs to NAND gate 260 to go high at the same time is when voltage A is equal to voltage C. When this condition occurs, there will be a low output from NAND gate 260 which is fed to enable NOR gate 263. The low output of NOR gate 263 is inverted and fed to trigger a one-shot 264. One-shot 264 has a time constant associated with resistor 265 and capacitor 266 which is preferably approximately 2.5 milliseconds long. The on time of this one-shot is selected by the fact that it must be reset before the next anticipated signal is received from NOR gate 263. The one-shot 264 triggers on the pulse received from NOR gate 263. Connected to the output of one-shot 264 is a second one-shot 267 which puts out a pulse for approximately 1 microsecond which is determined by the time constant of capacitor 268 and resistor 269.

The one-shot 264 in combination with the one-shot 267 functions as a noise suppression circuit. The one-shot 264 upon receiving a trigger pulse from NOR gate 263 changes state, and produces an output continuously for a relatively long time period set by capacitor 266 and resistor 265. Any extraneous signals or noise received by one-shot 264 during this time period will be ignored because one-shot 264 has not yet been reset. As the output of one-shot 264 goes high, the output of one-shot 267 goes high immediately producing the one microsecond pulse which is determined by capacitor 268 and resistor 269. Therefore, the one-shots 264 and 267 provide noise suppression while generating a precise one microsecond pulse every time the magnitude of two of the three-phase voltage signals A, B and C are equal.

Referring now to Figure 13C, the output of one-shot 267 is connected to counters 270 and 271 and a flip-flop

272 (Figure 2B). The counters 270 and 271 receive the output from one-shot 267 at their load terminals. When a pulse is received from one-shot 267, the counters 270 and 271 are loaded with the information in the form of a number from latches 273 and 274. The number which is placed in the counters 270 and 271 from the latches 273 and 274 is used to set the dwell time of the rectifier controller.

The number retained by latches 273 and 274 is obtained from the data bus 293 of the microprocessor. This number, as stated above, gives control over the dwell angle by providing a delay in the firing time of the SCRs 1 through 6.

The counter 271 is supplied with a clock pulse which is provided by a divide-by-10 counter 275. The input to the counter 275 is a one microsecond clock pulse which is received from the microprocessor. Therefore, the output of the divide-by-10 counter 275 is a pulse every 10 microseconds. The time delay produced by counters 270 and 271 is therefore the number set in (which is counted down) times 10 microseconds. The other input to the counters 270 and 271 is the input from the power up circuit 276. This turns the counter on when the unit is activated.

The output of counter 270 is connected to the S terminal of a flip-flop 272 (Figure 13B) which serves as a dwell delay register and has its reset terminal R connected to receive the output of one-shot 267. The flip-flop 272 is reset each time one-shot 267 delivers a one microsecond pulse to the reset terminal R. If the number set into counters 270 and 271 is zero, then the flip-flop 272 will be reset and set immediately and there will be no delay in the output Q of delay register 272 and therefore no direct current voltage reduction.

The output Q of flip-flop 272 provides a dwell angle control signal as an input to a NAND gate 280.

The other input to NAND gate 280 is from NAND gate 281 which supplies other necessary conditions for enabling NAND gates 219 through 224 in order to fire SCRs 1 through 6.

A current sensing dry reed relay 283 (Figure 13C) is provided to sense overload current in the direct current bus. When switch 283 closes, an overload signal is sent through OR gate 300 to a mode control register 285 which changes the input to NAND gate 281 and disables the gates 219 through 224 that control the gate pulse generators.

A power up circuit is generally designated at 276 and includes a connection to the power bus voltage VCC which feeds through an inverter 286 and to an amplifier 287. The amplifier 287 provides sufficient gain in order to supply the additional circuits, such as the gate pulse generators 225 through 230 and the gate amplifiers 231 through 236. Inverter 286 also provides a power up signal to the mode control register 285 through OR gate 300. The output of inverter 286 is also used to clear counters 270, 271 and latches 273, 274.

An address decoder 290 receives address information from the address bus 334 which is supplied from the microprocessor that controls the operation of the rectifier controller. The address decoder 290 produces outputs to control the various modes and functions of the rectifier controller. The Q1 output from address decoder 290 is fed to the mode control register 285 through an inverter 291. The Q2 output from the address decoder 290 is fed through an inverter 292 to the enable inputs of latches 273 and 274.

The Q2 output of address decoder 290 is used to trigger the latches 273 and 274 in order to allow them to receive data from the data bus 293. In this manner, a number is set in the latches 273 and 274 which is observed by the counters 270 and 271 for generating the dwell or delay signal which is sent to delay register or flip-flop 272.

The Q3 output from address decoder 290 is applied to a NAND gate 295 along with the one microsecond clock signal from the microprocessor. The output Q3 is used to enable NAND gate 295 in order to read data from a buffer register 296, which is connected to receive the output from NAND gate 295.

The Q4 output from address decoder 290 is applied to one input of a NAND gate 297 which also has as its other input the clock signal from the microprocessor. The Q4 output is used to reset a counter 325 and a shutdown latch 330 through an OR gate 298. This operation is effected by a clear fault command from the microprocessor.

The mode control register 285 has a single output Q0 which is connected directly to NAND gate 281, and is the primary enabling mode for the rectifier. The inputs to the mode control register 285 are information from address bus 334 and the clock signal from the microprocessor which is inverted by inverter 299 to be applied to the clock terminal of mode control register 285. Also connected to the mode control register 285 is the output from OR gate 300 which is received whenever there is an overload in the direct current bus which is sensed by switch 283, or whenever the power up signal from inverter 286 indicates that there is a power failure. In this manner, the mode control register 285 may be disabled.

The rectifier controller includes means for responding to a shoot-through detector 310, the latter being placed in the direct current bus between the rectifier SCRs and the inverter controller SCRs which comprise the load. As shown in Figure 13B, the shoot-through detector 310 has a capacitor 311 placed across the direct current bus and inductors 312 and 313 on the direct current bus. If a shoot-through should occur within the inverter which is indicated generally by reference numeral 314, there will be an apparent short circuit on the direct current bus which will cause an immediate discharge of capacitor 311.  As capacitor 311 discharges, the current from capacitor 311 will be sensed by a transformer 315 which generates in its secondary a voltage related to the shoot-through condition current of capacitor 311.  Within the transformer secondary there is placed a Zener diode 316 which acts as a threshold device, and which permits only voltages above its Zener voltage to be applied to the gate of an SCR 317 and to the loop consisting of resistors 318 and 319.

A resistor 319a is placed across the secondary of transformer 315 to provide a current path in parallel with the detector circuit which reduces sensitivity and absorbs energy which is insufficient to overcome Zener 316.  In this manner, the response of SCR 317 is limited to a predetermined Zener voltage, and likewise the voltage across resistor 319 is controlled.  A Zener diode 320 is placed across the gate cathode terminals of SCR 317 in order to prevent excessive gate voltages from being applied upon occurrence of a shoot-through.

The SCR 317 provides an additional margin of safety to the SCRs located in the inverter 314.  SCR 317 will be turned on when the Zener voltage of diode 316 is exceeded.  The turning on of SCR 317 essentially short circuits the direct current bus, and takes the current which would otherwise flow to the inverter SCRs.  In this manner, the direct current bus is rapidly disabled in response to a shoot-through condition.  The shorting of the output direct current bus combined with the disabling of the gates of the rectifier bridge assures that the inverter bridge SCRs 1 to 6 will turn off.

The voltage across resistor 319 is applied to an opto-isolator 321 which serves to sense the voltage across resistor 319 and to isolate this high power section from the logic circuitry which is connected to the output of opto-isolator 321. A Zener diode 322 is placed across the opto-isolator 321 which limits the voltage applied to the opto-isolator 321.

The output voltage from opto-isolator 321 is applied to Schmitt trigger 323 whose output is connected to a counter 325 and a one-shot 326.

The one-shot 326 has inputs from Schmitt trigger 323 and from the power up indicator 288. One-shot 326 produces a pulse of approximately 50 microseconds in duration which is used to disable the rectifier. The output of one-shot 326 is applied to one terminal of AND gate 281. In this manner, each time there is a fault detected as indicated by an output from Schmitt trigger 323, one-shot 326 will disable the gates of all of the rectifier SCRs by the action of AND gate 281 and NAND gate 280 which feed the center inputs to NAND gates 219 through 224. The time of operation of one-shot 326 is determined by the time constant of capacitor 327 and resistor 328 and is set to the recovery time desired.

Occasional shoot-through conditions will be handled automatically by the one-shot 326. However, when persistent failures in the form of continuous shoot-through conditions occur, it is desirable that the rectifier controller and hence rectifier circuit be completely shut down, and restarted either in response to a manual reset or in response to a command from the microprocessor. In order to provide for such multiple shoot-through protection, the output of Schmitt trigger 323 is also applied to counter 325 which counts the pulses from the Schmitt trigger, each pulse indicating detection of one shoot-through, until a predetermined number is reached. When a count of 8 is obtained, for example, an output from counter 325 is delivered at pin 8, and is applied to a shutdown latch 330. When the shutdown latch 330 goes low, its output, which is connected to AND gate 281, will disable the entire rectifier gate control system by way of NAND gate 280 and NAND gates 219 through 224.

One way of clearing the shutdown latch is by means of switch 331 (Figure 13B). Switch 331 when closed produces an output from a delay reset 332 at terminal Q. The output from terminal Q is applied to an OR gate 298 and hence to the reset input of counter 325. This same signal is also applied to open the shutdown latch 330 through an inverter 333. In this manner, the counter 325 is reset, and the shutdown latch 330 is opened to permit normal operation of the rectifier controller.

It is also possible to clear a fault by resetting counter 325 and shutdown latch 330 in response to a command from the address bus which is received from the microprocessor. A clear fault command when received on the address bus 334 is decoded in decoder 290, and a clear fault output signal is sent from terminal Q4 of address decoder 290 to one input of NAND gate 297. The other input of NAND gate 297 is the one microsecond clock from the microprocessor. The output of NAND gate 297 is then fed through OR gate 298 and hence to the counter 325 and shutdown latch 330 to accomplish the clear fault function as set forth above.

Connected to the counter 325 is a buffer register 296 which feeds to an output data bus 335 a count indicating the number of the shoot-throughs detected. When the microprocessor desires information relating to shoot-through conditions, an appropriate address is received by address decoder 290 to provide an output from terminal Q3. This output is applied through NAND gate 295 which places the count in register 296 on the data bus 335 for delivery to the microprocessor.

## Operation

The rectifier controller operates in a normal mode wherein rectification is continuously achieved, and the output on the direct current bus is steady. During normal operation, the NAND gates 219 through 224 are controlled in accordance with the detectors 201 through 206 which produce signals indicative of whether one voltage is greater than or equal to another. Certain NAND gates 219 through 224 are enabled whenever one phase voltage is more positive than the other two phase voltages, or when one phase voltage is more negative than the other two phase voltages. Firing signals are therefore generated in accordance with the most posivite and most negative phase voltages.

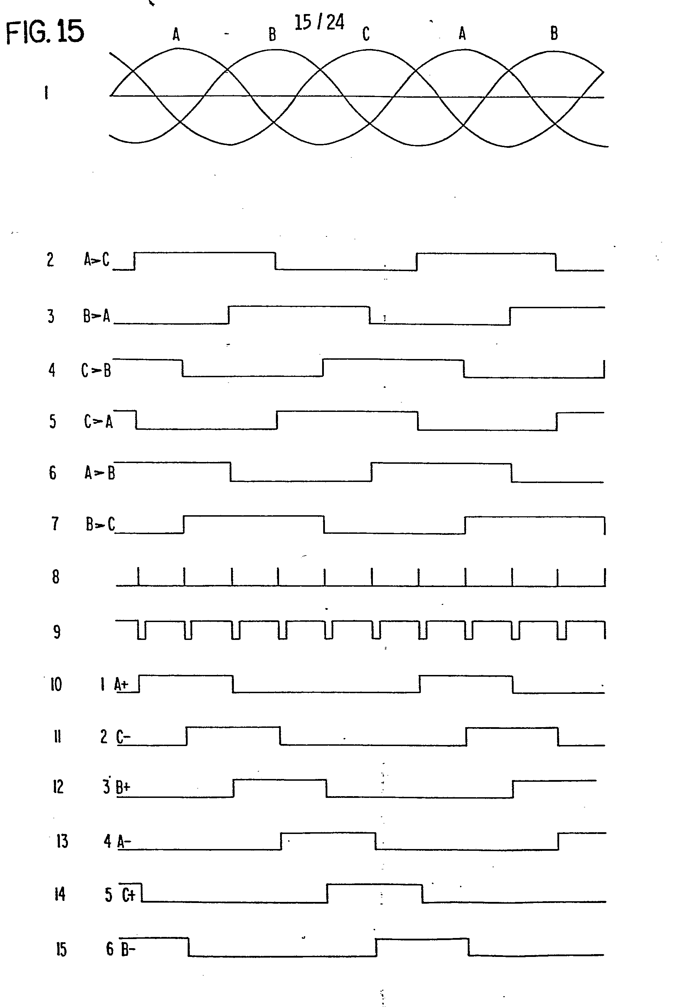

Referring now to Figure 15, the rectifier controller in normal operation controls the silicon controlled rectifiers 1 to 6 of the rectifier bridge and fires each SCR of the rectifier bridge when its input phase voltage is more positive or more negative than any other input phase voltage. Curves 1 shows the three-phase voltages A, B and C. Further, in order to provide output voltage adjustment, there is a dwell or delay applied to the firing of each SCR in accordance with a command which is received from the microprocessor control unit. In normal operation the firing order is controlled by the determination of which voltage is most positive and the firing time is controlled by the dwell.

In addition to normal operation, the rectifier controller is also responsive to abnormal conditions, such as shoot-through conditions occurring in the inverter (which comprises the load), the number of shoot-throughs that occur within a period of time, direct current bus current overloads, and input power failures.

Referring now to Figures 13 and 15, the phase A, B and C voltages are shown as curves 1. The voltage sensing means 201 through 206 receive as inputs each of the three input phase voltages A, B and C and Schmitt triggers 213 through 218 produce outputs which indicate when a particular voltage is more positive than another. Waveform 2 of Figure 15 shows the output of Schmitt trigger 218 which is high when the voltage A is greater than the voltage C. Comparison of curves 1 and waveform 2 in Figure 4 shows that the output of Schmitt trigger 218 goes high when A crosses C to become more positive than C and remains high until A again crosses C to become more negative than C. Similarly, waveform 3 represents the output of Schmitt trigger 214, while waveform 4 represents the output of Schmitt trigger 216 and waveform 5 represents the output of Schmitt trigger 217. Waveform 6 represents the output of Schmitt trigger 213 and waveform 7 represents the output of Schmitt trigger 215.

The rectifier controller, absent a dwell signal and absent any abnormal conditions or faults, will produce gate control signals whenever any phase voltage A, B or C is more positive than any other phase voltage, and similarly will produce gate control outputs when any phase voltage A, B or C is more negative than any other phase voltage. Waveform 10 of Figure 15 shows the signal to be applied to the gate of SCR 1 which occurs when phase voltage A is more positive than any of the other voltages. Waveform 10, when considered without dwell, is generated by NAND gate 224 in response to the inputs from Schmitt triggers 218 and 213. These Schmitt trigger outputs are shown as waveforms 2 and 6. Therefore, the NAND gate 224 produces an output when waveform 2 is high and when waveform 6 is high. This output coincides with the time period wherein voltage A is more positive than voltages B or C as may be verified by comparing waveform 10 with curves 1 in Figure 15.

In a similar fashion, the control voltages for gates 2, 3, 4, 5, and 6, shown by waveforms 11, 12, 13, 14 and 15 which represent respectively C most negative, B most positive, A most negative, C most positive, and B most negative, are generated in accordance with the inputs to their respective NAND gates 219 through 223 which are received from the respective Schmitt triggers 213 through 218 as shown on Figure 13A and in the waveforms 2 through 7 of Figure 15.

In order to achieve a dwell which will provide control of the output direct current voltage by adjusting the firing time of SCRs 1 through 6, it is necessary to delay or retard the firing of each individual SCR. The desired output voltage or dwell time is commanded by the microprocessor control unit and is received by the rectifier controller. A dwell start output signal is generated by comparator NAND gates 260, 261 and 262 which apply their outputs to OR gate 263. As can be seen with reference to waveform 8, whenever the two voltage inputs to any of the NAND gates 260 through 262 become equal, there is an output. By way of example, NAND gate 260 has as inputs the outputs from Schmitt triggers 218 and 217 which represent respectively voltage A greater than or equal to voltage C and voltage C greater than or equal to voltage A. When voltage A equals voltage C, NAND gate 260 will produce a pulse. As can be seen in Figure 15, waveform 2, which represents voltage A greater than voltage C, and waveform 5, which represents voltage C greater than voltage A, go respectively high and low or become equal at the point where waveform 8 produces a short pulse indicating this condition.

The detection of the equal points produces a dwell start output signal from one-shot 267 which is fed to the reset input R of delay register 272. This dwell start output signal is shown as waveform 8 of Figure 15.

In order to complete the dwell function, it is necessary then to retard the firing of the SCRs 1 through 6 for a predetermined period of time. This is accomplished by the rectifier controller by use of counters 270 and 271 which count down a number received from the microprocessor data bus 293. When the countdown of the number is complete, the flip-flop 272 changes state, and thereby enables the gate 280 which in turn enables gates 219 through 224 in order to permit firing of the appropriate SCRs. If the number set in the counters 270 and 271 is zero, then the firing will occur immediately since the dwell angle is zero. Waveform 9 of Figure 15 shows the output of dwell delay register 272. The shaded portion of waveforms 10 to 15 show the portions of the gate control signals that are removed by the dwell delay.

In addition to normal operation, the rectifier controller also provides for rapid response to abnormal conditions and monitors continuous abnormal conditions in order to provide protection to the inverter which is depicted by reference numeral 314. The shoot-through detector 310 produces an output when a shoot-through occurs in the SCRs of the inverter 314. The detection is produced by the sudden surge of current from capacitor 311 which is sensed by transformer 315, and which produces a voltage across resistor 319. The voltage across resistor 319 is sensed by opto-isolator 321 which is connected to Schmitt trigger 323 which produces an output pulse. The output pulse from Schmitt trigger 323 indicates a shoot-through condition has occurred in the inverter 314. Once a shoot-through is detected, one-shot 326 fires and inhibits gate 281 which in turn removes the input from gates 219 through 224 which removes all gate control signals from SCRs 1 through 6. In this manner, whenever a shoot-through occurs, the rectifier will be turned off for a predetermined period of time in accordance with the timing of one-shot 326.

-66-

In addition to the short term turn off achieved through one-shot 326, if a continuous series of shoot-throughs occur, the system will automatically shut down until it is manually restarted by switch 331, or until such time as a restart or clear fault command is received from the address bus 334 and the microprocessor. This operation is achieved through counter 325 which is also connected to the output of Schmitt trigger 323. When the counter 325 counts a predetermined number, such as 8, shut down latch 330 inhibits gate 281 which in turn inhibits gates 219 through 224. Through this mode of operation, continuous shoot-through detection will shut down the rectifier until an order from an outside source is received to restart the rectifier.

Also responsive to the shoot-through condition is an SCR 317 which is used to short circuit the direct current bus during a shoot-through condition. The gate of SCR 317 is again controlled by the same shoot-through detection that produces the inhibit signals to the firing gates of the rectifier SCRs.

Other protection is provided through information supplied to the mode control register 285 which indicates whether power is properly up from power source 276, or whether there is a direct current bus overload which is sensed by switch 283.

The mode control register 285 is again responsive to information on address bus 334 which receives the mode command from the microprocessor to produce the output at terminal Q0 of register 285 which is used to enable gate 281 in normal operation.

C.     Inverter Controller

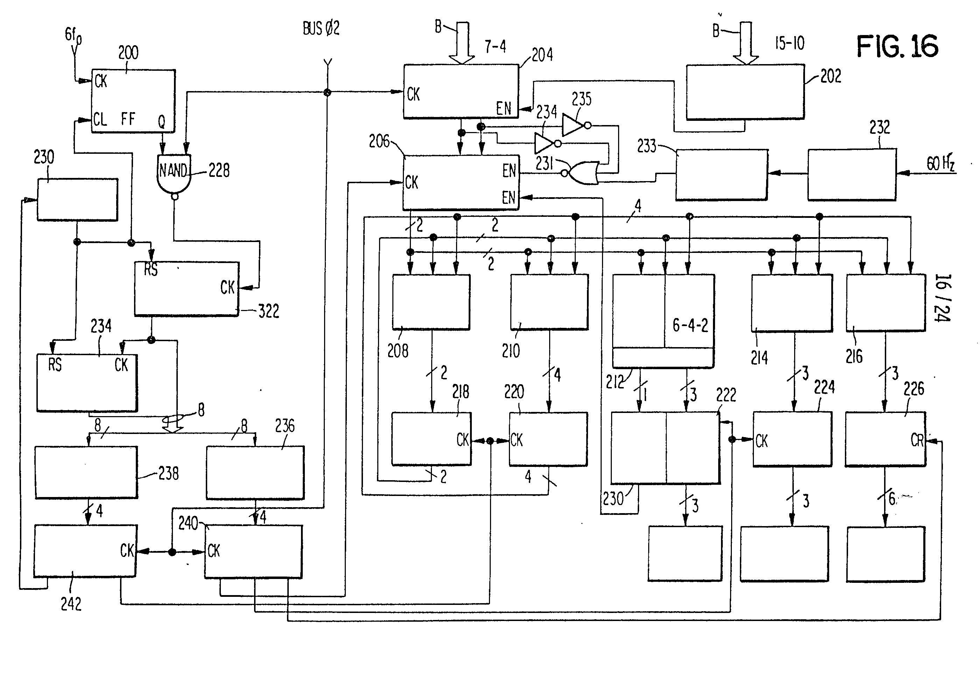

Referring to Figure 16, information pertaining to the desired mode of operator of the inverter is received from the substation injection unit microprocessor along an address bus B by an address page recognition ROM 202 and a mode select register 204. The mode select register 204 provides a two bit output which represents one of the possible modes of operation of the inverter. The modes of operation are OFF (output 01), IDLE (output 10) and INJECT (output 11). In OFF, the SCRs are all turned off momentarily. The IDLE mode corresponds to the absence of a pulse in the pulse code signal that forms the injection message, while the INJECT mode corresponds to the presence of a pulse in the pulse code signal.

The initial timing of the inverter controller output signals is achieved through a mode control register 206. The mode control register 206 is clocked by a timing signal referred to as the load mode register signal received from a timing register 240, and is enabled by signals from an enable mode change register 230, to be explained more fully below. A second enabling input is applied to mode control register 206 from an OR gate 231 which is responsive to a back feed 60 Hertz signal obtained either from the power lines or from the rectifier controller of the substation injection unit, as will be explained in greater detail hereinafter.

Upon receipt of the two enabling inputs and the load mode register signal, mode control register 206 receives the two bit code from the mode select register 204 and delivers same to its two line output which forms a portion of an address for an eight bit address bus that feeds a plurality of read-only-memories (ROMs) 208, 210, 212, 214 and 216.

ROMs 208 through 216 can be denoted as a next table ROM 208, a next line ROM 210, enable next mode change and next main SCR ROMs 212 and 214 and a next commutate SCR ROM 216.

Associated respectively with each of the ROMs 208 through 216 are output registers 218, 220, 222, 224 and 226 which can be denoted as a table register 218, a line register 220, main SCR registers 222 and 224 and commutate SCR register 226. An enable mode change register 230 is also connected to receive an output from ROM 212.

The addresses for next table ROM 208, next line ROM 210, enable next mode change and next main valve ROM 212, next main valve ROM 214 and next commutate valve ROM 216 are generated in response to the initial two bit address from the mode control register 206, and further in response to timing signals received from timing registers 240 and 242. The address bus for providing information to the ROMs 208 through 216 includes eight bits of address. Two of the eight address bits are supplied by the mode control register 206. The remaining six bits are generated by next table and next line ROMs 208 and 210. The registers 218 and 220 receive the information from ROMs 208 and 210 when they are clocked by advance table signals which are generated by timing register 242. The information in next table ROM 208 is the next table information and comprises two of the address bits which are applied to all of the ROMs 208, 210, 212, 214 and 216. The ROM 210 contains the next line address information in the form of the remaining four bits for the address bus.

The eight bit address to ROMs 208, 210, 212, 214 and 216 consists of the information on two lines from the mode control register 206, the information on two lines from table register 218, and the information on four lines which come from the line register 220. The address on the address bus is changed when a first timing signal, the advance table signal, is received from timing register 242. The advance table signal is applied to the clock terminals of table register 218 and line register 220. When these registers are clocked, the next table information from ROM 208 and the next line information from ROM 210 will be latched in and set as the table and line information for six of the eight bits of the address bus. As the address bus information changes, the output of next table ROM 208 and next line ROM 210 will advance to the next address of the ROMs which contains information at the location addressed by the address bus pertaining to the next desired address. In this manner, whenever the clock terminals of the table register 218 and the line register 220 are clocked, the address on the eight bit address bus will change to the next desired address. It is through the continuous clocking of the table register 218 and the line register 220 that the address information for ROMs 208, 210, 212, 214 and 216 is continuously changed for cycling the firing control information for the inverter SCRs.

The ROMs 212, 214 and 216 with their associated output registers 222, 224 and 226 operate in a similar manner. The information appearing on the outputs of ROMs 212, 214 and 216 is the next-to-be-used firing information for the main SCRs and commutate SCRs of the inverter.

When the next main SCR ROM 212 is addressed, there appears on its output bus three bits for indicating the next desired firing state of inverter SCRs 6, 4 and 2. Similarly, when the next main SCR ROM 214 is addressed, it produces on its output three bits for indicating the next desired firing state for inverter SCRs 5, 3 and 1.

The main valve register 222 receives the three bits of information from next main SCR ROM 212 when a timing signal is received on the load main SCR register line which is generated by timing register 240. Similarly, the main SCR register 224 which controls SCRs 5, 3 and 1 is also clocked by the load main SCR register timing signal from controller timing register 240.

All of the commutate SCR firing controls are generated by next commutate SCR ROM 216 which also responds to the address bus information. Next commutate SCR ROM 216 has as outputs three bits which are received by commutate SCR register 226. The commutate SCR register 226 preferably comprises a 3 by 8 decoder for decoding the three bit output from next commutate SCR ROM 216 to create six commutate SCR firing signals (only six of the eight output bits are used). The commutate SCR register 226 has as a clock input the fire commutate SCR timing signal which is received from timing register 240.

In order to clock the mode control register 206, the table register 218, the line register 220, the main SCR register 222, the main SCR register 224, and the commutate SCR register 226, it is necessary to generate timing signals which are appropriately spaced in time to control the desired sequence of events. The timing of the events determines the output frequency of the inverter.

The apparatus for generating the necessary timing signals is also shown in Figure 16. A 6fo signal (where fo = the desired pulse code frequency) is applied to the clock input of a run sequence flip-flop 200. The run sequence flip-flop 200 is triggered on the positive zero-crossing of the 6fo signal and produces an output to a sequence clock in the form of a NAND gate 228. The other input to NAND gate 228 is a one microsecond clock pulse. The output of NAND gate 228 is a sequence clock signal which is a burst of one microsecond clock pulses for a period of time determined by the run sequence flip-flop 200. The output of NAND gate 228 is fed to a timing sequence counter 232 at its clock terminal. The timing sequence counter 232 and a companion timing sequence counter 234 count the one microsecond clock pulses within the run sequence which are received from NAND gate 228. The output of timing sequence counters 232 and 234 is an eight bit address code which is used to address a timing sequence ROM 236 and a timing sequence ROM 238. Four of the address bits are used for timing sequence ROM 236 while the four remaining address bits are used for timing sequence ROM 238.

As signals are generated by the timing sequence counters 232 and 234, the data in the memory addresses of the timing sequence ROMs 236 and 238 are read out, one address each microsecond. The address code from the timing sequence counters 232 and 234 changes upon each clock input received from the NAND gate or sequence clock 228.

The data outputs from the timing sequence ROMs 236 and 238 are fed respectively to timing registers 240 and 242. There are four bits of data fed from timing sequence ROM 236 to timing register 240 and four bits from timing sequence ROM 238 to timing register 242. The clock signal for timing registers 240 and 242 comprises the one microsecond clock input. The outputs of the timing registers 240 and 242 are precisely timed pulses in accordance with the one microsecond clock, and in accordance with the timing sequence ROM address chosen by the timing sequence counters 232 and 234.

One output from the timing register 242 comprises a sequence terminate signal. The sequence terminate signal is applied to a reset sequence circuit 230 which preferably comprises a one-shot flip-flop. The output of the one-shot 230 is then applied to reset the timing sequence counters 232 and 234, and also to clear the run sequence flip-flop 200. The application of this pulse to the run sequence flip-flop 200 terminates the sequence until the next positive going 6fo signal is observed.

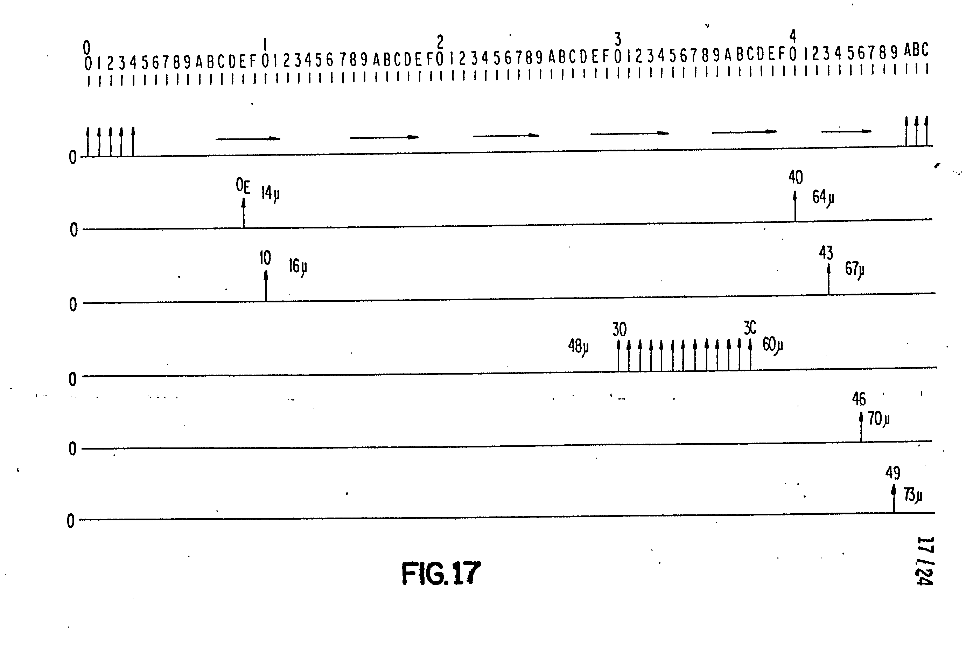

In Figure 17, there is shown a timing diagram which shows the one microsecond inputs and the various outputs of timing registers 240 and 242. The numbers appearing along the top are written in the hexadecimal numbering system and correspond to the memory locations in timing sequence ROMs 236 and 238, and the numbers written just above each timing pulse in the timing lines below indicate the corresponding hexadecimal numbers or locations in ROMSs 236 and 238 where data exists to output the timing pulses at the desired times. To the side of each pulse, there is also indicated the time measured from zero when the pulse occurs. The line labeled one microsecond clock shows the one microsecond clock signals on one input to the sequence clock or NAND gate 228. When a 6fo positive going signal is received by the run sequence flip-flop 200, the other terminal of NAND gate 228 goes high and the sequence clock 228 emits a burst of one microsecond sequence pulses until the timing sequence is terminated. The last line in Figure 4 shows that the sequence terminate signal is stored at memory location 49, or at the time of the 73rd microsecond clock pulse.

The five timing signals from the timing registers 240 and 242 are denoted the load mode register signal, the load main valves register signal, the advance table signal, the fire commutate valves signal, and the sequence terminate signal, and are all controlled by the information loaded in the timing sequence ROMs 236 and 238. Only five of the eight potential output lines from ROMs 236 and 238 contain information which is used in the run sequence. These five lines are used to advance the table and line, load the main valve registers, fire the commutator valves, load the mode register, and to terminate the sequence.

As can be seen in Figure 17, at ROM memory location 00 the output of all five timing lines is zero. The output of all five timing lines remains zero until address 0E which is addressed at 14 microseconds. At this address, a "1" will appear on the advance table line and an "0" will remain on the rest of the output lines. Similarly, at ROM address 10, which is addressed at 16 microseconds, a "1" will appear on the load main SCR registers line and the rest of the lines will remain "0". The next information from the ROMs 236 and 238 are the fire commutate SCRs signals and "1"s will be delivered from address 30 and will continue until address 3C. The next "1" output will appear on the advance table line from ROM address 40. Similarly, the next "1" output will appear from ROM address 43 which occurs at 67 microseconds and which appears on the load main SCR register line. The next ROM address which produces a "1" output is ROM address 46 which delivers a "1" on the load mode register line. The last ROM address used terminates the sequence, and this appears on the sequence terminate line when ROM address 49 is read out.

-74-

The termination of the sequence occurs after about 73 microseconds which is a relatively short period of time when compared to the time required for completion of one 6fo cycle. In the preferred embodiment, the pulse code output frequency fo is 340 Hertz. Therefore, the 6fo frequency is 2,040 Hertz. The time for one 6fo cycle is therefore approximately 490 microseconds. It therefore can be seen that the complete timing sequence occurs during the initial 73 microsecond portion of each 6f0 signal. The outputs on the various timing lines to the inverter controller registers do not change until the next 6fo cycle is initiated over 400 microseconds later.

The load mode register timing signal is generated by timing register 240, and is applied to the mode control register 206 as the last pulse of the series of timing sequence pulses which control the cycling of the inverter controller. It is through this pulse that a new address is applied to ROMs 208 through 216 in response to a mode change address received by the mode select register 204. The load mode register clock pulse is the final timing pulse of the timing sequence. Therefore, a change in the information in the mode control register 206 will not effect the firing of the SCRs of the inverter until the next 6fo interval begins, and the next advance table timing signal is output from timing sequence ROM 238.

The enable mode change register 230 is responsive to the enable next mode change portion of the next main SCR ROM 212. The enable next mode change output is a one bit output which occurs at the end of each 6fo interval. The enable mode change register 230 is responsive to the load main SCR register timing signal from timing register 240 as is the main SCR register portion of register 222. The output of the enable mode change register 230 is then fed to the mode control register 206 to enable the mode control register at the end of each 6fo interval, or at the end of each 340 Hertz Signal.

At the beginning of the INJECT mode, it is necessary to inject the pulse code signal at the proper point in the 60 Hertz voltage of the substation bus to prevent injection transformer saturation. This point is determined experimentally and is set by adjustment of the back feed window delay circuit 232.

The second enabling input for the mode control register 206 is received from the back feed window delay circuit 232 which receives the 60 Hertz signal representative of the line voltage. A back feed window delay circuit 232 and a one-shot window width circuit 233 provide one of the three inputs to an OR gate 231.

The two bit output from mode select register 204 is connected to inverters 234 and 235 so that the output of inverters 234 and 235 is a logical "0" when the mode select register outputs a signal representing the INJECT mode, which is a "11" input to the inverters 234 and 235. The OR gate 231 acts as a disabling gate for the mode control register 206. When the input to the OR gate 231 is "0" on all three lines, the output of the OR gate 231 will be a logical "1", which disables the mode control register 206. At all other times, when a "1" appears on any one of the three input lines to OR gate 231, the output of OR gate 231 will enable the mode control register 206. In this manner, the only possible time that the mode control register is disabled is during the INJECT mode when the output of inverters 234 and 235 are logical "0"s.

The back feed window delay circuit 232 has as an input a point on the 60 Hertz three-phase lines. The back feed window delay 232 is a one-shot with an adjustable time constant which will delay its output a predetermined period of time which is selectable in accordance with equipment operation. The back feed window delay may be on the order of, for example, one to five milliseconds. The delayed output from the back feed window delay 232 is then fed to a one-shot flip-flop 233 which has a predetermined width or time which is slightly greater than the time required for one 340 Hertz cycle. This time may be set to, for example, four milliseconds. The output of the one-shot 233 will be a logical "0" until the window from circuit 232 is seen. When the window is present, the one-shot 233 output will be a logical "1" which will allow the mode control register 206 to be enabled. When the output of the one-shot 233 is a "0" during INJECT, the mode control register 206 will be disabled by virtue of the fact that there are three "0"s on the inputs to OR gate 231.

The width of the window or the time period of four milliseconds for the one-shot 233 must be greater than the time interval between one enable mode change command from register 230 and the next. Since the enable mode change commands from register 230 occur only once in each 340 Hertz cycle, then the time period for the one-shot 233 must be slightly greater than the time for one 340 Hertz cycle.

Outputs of main valve registers 222 and 224 are each 20 connected to a gate pulse generator 255 as illustrated in Figure 14A. The gate pulse generators may each comprise, for example, 50 kilohertz oscillators which are controlled by the output from the main SCR registers 222 and 224. Figure 3A shows a preferred embodiment of a single gate 25 pulse generator. This gate pulse generator 255 consists of two one-shot pulse generators 268 and 269 and a NAND gate 267 which receives as one input thereto an the output from one of the main SCR registers 222 or 224. The NAND gate 267 also has as a third input thereto a connection from a window circuit located in the inverter bridge, to be described later. NAND gate 267 provides an input to one-shot 268 which fires for a time determined by capacitor 270 and resistor 271. The output of one-shot 268 is then fed to one-shot 269 which then fires and remains on for a period determined by capacitor 272 and resistor 273. When one-shot 269 returns to its normal state, the output of NAND gate 267 again goes high, and one-shot 268 is again triggered, thereby producing the oscillation required at its $\overline{Q}$ output. The values of capacitor 270, resistor 271, capacitor 272, and resistor 273 are chosen so that the frequency of the oscillator will be approximately 50 kilohertz.

The output of the gate pulse generator of Figure 14A is then applied to a gate amplifier or integrated circuit driver 261 as illustrated in Figure 14B. The gate amplifiers for each SCR, which is driven by the main valve registers 222 and 224, are identical. The outputs of the transistor amplifiers 261 are then applied to the inputs of the various inverter SCRs through isolation transformers.

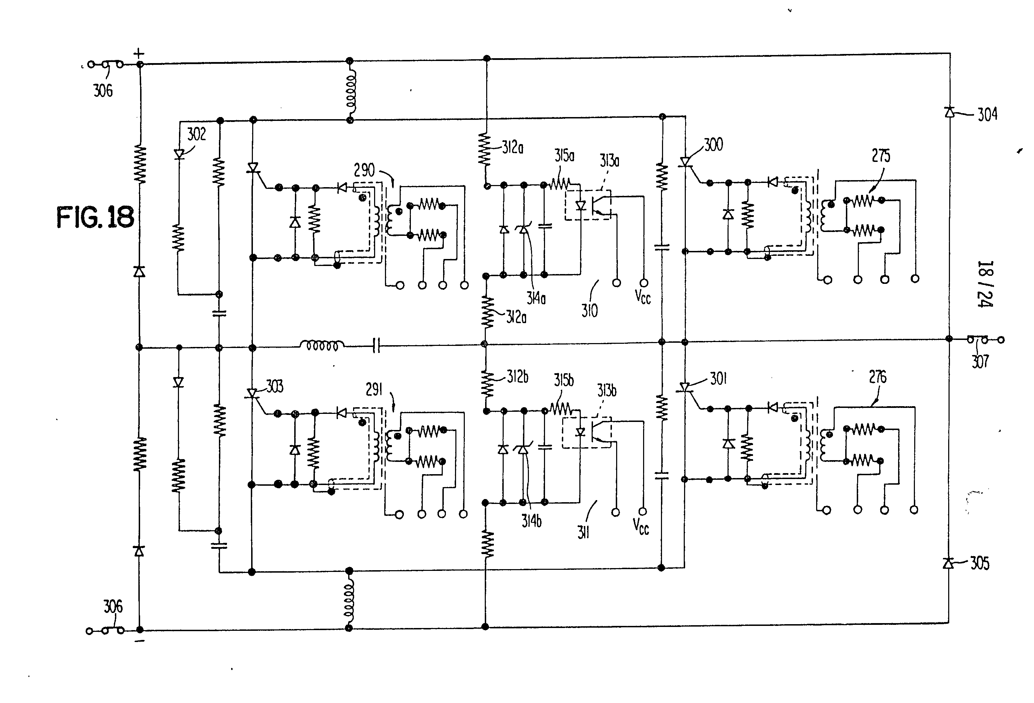

The isolation transformers are identified by reference numerals 275 and 276 of Figure 18. A preferred embodiment of an isolation transformer for the SCR gates is depicted in Figure 14C and has the outputs from a gate amplifier applied to the transformer winding 281 to develop a gate output signal on transformer winding 282. A diode 283 is connected in series with the secondary of the transformer 282 to provide rectification of the 50 kilohertz signal which is necessary for proper control of the SCR gate. The isolation transformer also includes a coaxial shield 254 on the secondary and a Faraday shield 285 to prevent triggering of the SCR by noise that can be capacitively fed through the transformer.

The commutate SCR register 226 has as an input one microsecond timing signals which are generated when the fire commutate SCR signal from timing register 240 clocks commutate SCR register 226. Since the output from register 226 output is at a high frequency, it is not necessary to utilize a 50 kilohertz oscillator as was used in the driving circuitry for the main SCR controls. Therefore, the outputs of commutate SCR register 226 are fed directly to transistor amplifiers of the type shown in Figure 14A. The outputs of these transistor amplifiers are then fed to the commutate SCR isolation transformers 290 and 291 (Figure 18). The isolation transformers 290 and 291 are identical to isolation transformer 275 which is illustrated on Figure 3C.

In Figure 18 there is shown an inverter circuit which is used for one of the three-phase outputs of the inverter. The other two phase outputs are handled by substantially identical circuits which therefore need not be described. The inverter circuit shown is of the type known as a McMurray inverter. This inverter utilizes main SCRs 300 and 301, and commutate SCRs 302 and 303. The power input to the inverter is on the DC bus 306 and the single phase output voltage is on line 307.

The diodes 304 and 305 are connected across SCRs 300 and 301 respectively. The diodes 304 and 305 cooperate to handle load currents when the phase angle of the load is other than zero.

In Figure 18 there are shown two gate inhibit circuits 310 and 311. The gate inhibit circuit 310 senses the voltage across diode 304, and the gate inhibit circuit 311 senses the voltage across diode 305. The gate inhibit circuits include resistors 312a and 312b which limit the current to the voltage sensing device.

The inhibit circuits 310 and 311 also include opto-isolators 313a and 313b. The voltage across the opto-isolator diodes is limited to, for example, 5 volts by Zener diodes 314a and 314b. The resistors 315a and 315b further limit the current applied to the opto-isolators 313a and 313b which are respectively connected to NAND gates in the gate pulse generators associated with each respective gate. The gate pulse generator for SCR 300 is represented in Figure 14A by reference numeral 255. In Figure 14A, NAND gate 267 has, as an input, the output from opto-isolator 313a. Therefore, whenever a "0" appears as the output of opto-isolator 313a, a logical "0" is applied to NAND gate 267, which inhibits the output of NAND gate 267 and stops the gate pulse generator 255, which in turn turns off the signal to the gate of SCR 300. In Figure $_{18}$, if diode 304 is back biased, the voltage across diode 304 will produce a voltage across Zener diode 314a and hence across the diode of opto-isolator 313a. When this condition occurs, the opto-isolator will produce a logical "1" as its output, and NAND gate 267 will be enabled. In this manner, the circuit is responsive to the voltage across diode 304.

When diode 304 is conducting, it is necessary that the gate control voltage to SCR 300 be inhibited or turned off, since, when diode 304 is conducting, SCR 300 will be reverse biased, and the appearance of any gate voltage during such a reverse bias condition will produce a failure of the SCR 300.

In order to understand the operations which produce conditions wherein the gate inhibit circuit is utilized, during the inject mode, the following analysis of the action of the inverter circuit is required.

When the SCR 301 is conducting, current will flow through SCR 301 from the phase output 307 to the negative DC bus. When the end of the 6fo interval during which SCR 301 is conducting is reached, the control gate to SCR 301 is first turned off in accordance with the load main SCR register command, which occurs at 16 microseconds and which is produced by the timing register 240 of Figure 1. When this signal is received, the SCR 301 will have its gate signal removed, but the SCR 301 will continue to conduct current. It is then necessary to commutate the SCR 301 by turning on SCR 303. A fire commutate SCR signal is sent from the timing register 240 to the commutate SCR register 226 (Figure 16). This produces commutate signals for SCR 303 commencing at 48 microseconds and continuing to 60 microseconds (See Figure 17). During this time interval, SCR 303 will be turned on, and the current will be removed from SCR 301 thereby allowing SCR 301 to turn off.

During commutation, the load current will be carried by commutate SCR 303, but this condition is undesirable for a long period of time.

The next step is therefore the advancing of the table in accordance with timing register 242 which clocks table register 218 and line register 220 to change the address on next main SCR ROMs 212 and 214. When this occurs, the next SCR command will appear on the inputs to main SCR registers 222 and 224. When the load main SCR register timing signal is sent at 67 microseconds from timing register 240, the SCR firing information will change and a signal to turn on the gate of SCR 300 will begin.

Even though there is a command from the main SCR register 222 or 224 to turn on the SCR 300, the SCR 300 should not be turned on because, as described above, there will initially be current flowing through diode 304. The current flow through diode 304 produces the reverse bias condition on SCR 300 which requires that SCR 300 not receive a gate signal. It is during this condition that the gate inhibit circuits must inhibit any voltage to the gate of SCR 300. This is accomplished by sensing the low voltage across diode 304, which produces a logical "0" output from opto-isolator 313a which inhibits NAND gate 267 of Figure 14A.

When there is a command to switch from the conduction of SCR 300 to the conduction of SCR 301, the procedure will be repeated, and the gate inhibit circuit 311 will protect SCR 301 in the same manner as described above with respect to circuit 310 and SCR 300.

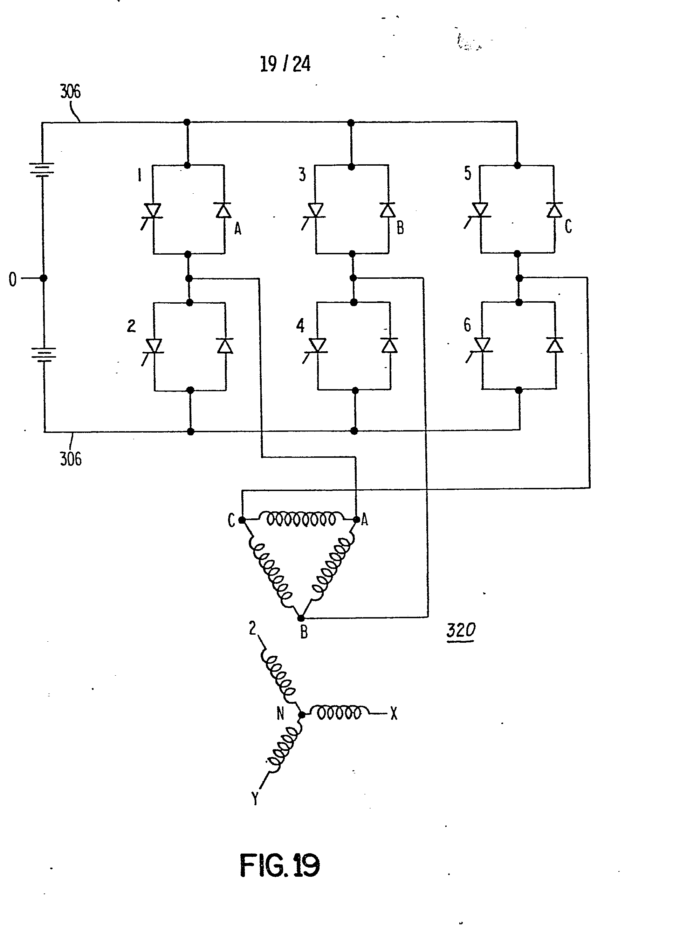

When the inverter is in its IDLE mode, it is necessary to provide a short circuit current path in the primary of the injection transformer 320 connected to the output of the inverter for injecting the 340 Hertz pulse code signals onto the power lines, as shown in Figure 19. This short circuit path is achieved by turning on the lower SCRs in the inverter bridge (SCRs 6, 4 and 2). Therefore, during IDLE, the output of main valve register 222 continually turns on the gates of SCRs 6, 4 and 2.

In this manner, there is created a recirculating current in the delta wound primary of the injection transformer 320. The circulation is through the connection of each of the three-phase lines of the delta transformer 320 to one side of the DC bus 306 by turning one set of the SCRs on. However, when the SCRs are turned on, it is also necessary to consider the action of the diode which is paired with each SCR. Such parings comprise SCR 300 with diode 304, and SCR 301 with diode 305 (Figure 18). The circulating current in the primary of the transformer 320 is an alternating current, and this requires that diodes associated with the on SCR conduct part of the current. The diodes associated with the main SCRs 6, 4 and 2 conduct during IDLE, as shown in Figure 19.

In the IDLE mode, when SCR 301 is turned on, there must be a means for removing the gate signal from SCR 301 during the time period in which its paired diode 305 conducts. This again is implemented by the gate inhibit circuit 311. As the voltage on diode 305 goes to zero, the output of the inhibit circuit 311 will be a logical "0" which, when fed to the gate pulse generator associated with SCR 301, will turn off its associated NAND gate 267 as shown in Figure 14A.

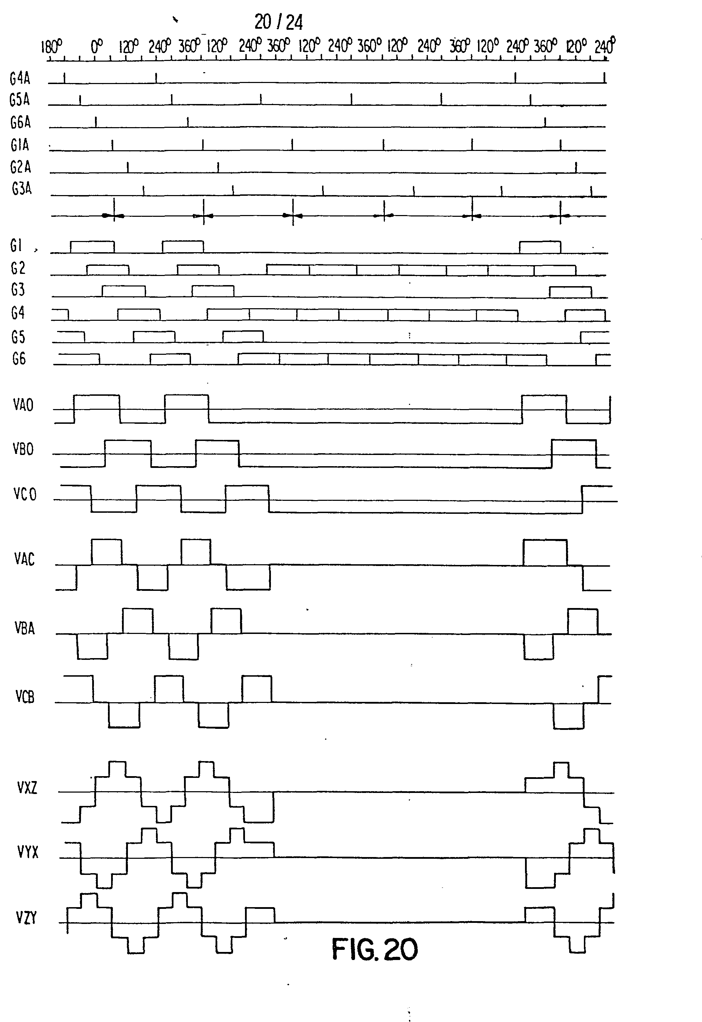

In Figure 20, there is shown the timing diagram of the gate SCR signals and the commutate SCR signals. This diagram has been constructed without showing the gate inhibit in both the IDLE and in the INJECT modes in order to more clearly illustrate the timing of the value gates by the controller. The top set of waveforms in Figure 20 illustrate the commutate SCR signals which are labeled G1A through G6A. The commutate SCR signals are shown as narrow pulses, although there are 12 commutate fire pulses generated by timing register 240 which are fed to the commutate SCR register 226. The time duration of these commutate SCR pulses total only 12 microseconds.

The gate SCR signals are shown below the commutate valve signals and are indicated generally as G1 through G6.

The next set of curves comprises the voltages from the McMurray inverter's three phase outputs to the zero reference of the DC voltage supply. These voltages are from A to 0, B to 0 and C to 0 in Figure 19. "0" is the center or reference point of the DC supply or bus 306.

Shown next in Figure 20 are the voltages from line-to-line which are applied to the delta connection of the injection transformer 320 of Figure 19.

The last set of curves in Figure 20 are the voltages which appear on the secondary or Y connection of transformer 320 which are injected into the power lines for signaling purposes.

In Figure 19 is illustrated the layout of the SCRs which correspond to the main SCR designations 6, 4 and 2 and 5, 3 and 1 in main SCR registers 222 and 224 from Figure 16. The SCRs in Figure 19 are numbered in accordance with their firing order.

As can be seen by examining the gate SCR voltage signals G1 through G6 in Figure 5; one SCR turns off and another turns on at each switching time. When it is desired to fire SCR 1, it is first necessary to turn off SCR gate 4, commutate SCR 4, and then turn on SCR gate 1. This timing sequence for turning off and turning on is controlled by the firing control signals which are set forth in Figure 17. The sequence starts first with the advance table command at 14 microseconds. This command sets the next main valve information at the input of main SCR registers 222 and 224. When the load main SCR register pulse is received at 16 microseconds, the on gate signal to SCR 4 will be removed. At 48 microseconds, the commutate pulses will begin. The commutate pulse is shown as G4A, the first line of Figure 20. When the commutate pulse is terminated, SCR 4 will be turned off and the diode associated with SCR 1 will conduct. At this point, it is necessary to turn on SCR 1 in order to complete the switching cycle. SCR 1 is turned on by first advancing the table to the next SCR command, and this command occurs at 64 microseconds, again as shown on Figure 17. Secondly, it is necessary to change the main SCR firing information in register 224 in order to turn main SCR 1 on. This is accomplished when the load main SCR register signal

-84-

at 67 microseconds which is received by the main SCR register 224. At this point, the turning off of SCR 4 and the turning on of SCR 1 has been accomplished.

The firing information which produces the desired main SCR and commutating SCR firing orders during the various modes is loaded into appropriate addresses in ROMs 208 through 216.

Referring again to Figure 20, the voltage A0 line indicates the voltage from point A of Figure 6 to 0, the neutral of the DC bus. The voltage A0 is applied to point A of the delta connection of transformer 320 of Figure 19. Similarly, the voltages B0 and C0 are applied to the other terminals B and C of the delta connected transformer 320. The voltages AC, BA and CB are the voltages from point A to point C, point B to point A and point C to point B, respectively, across the windings of transformer 320. By adding the voltages A0 and B0, the voltage BA is obtained. Next, the voltages VXZ, VYX and VZY are shown at the bottom of Figure 20. These voltages represent the waveforms as they would appear on the output of transformer 320 absent any inductance. However, the secondary of the transformer is connected to the utility power system which is highly inductive. Therefore, these output voltages are substantially smooth, and appear sinusoidal with little harmonic distortion.

D.    Substation Injection Unit Software

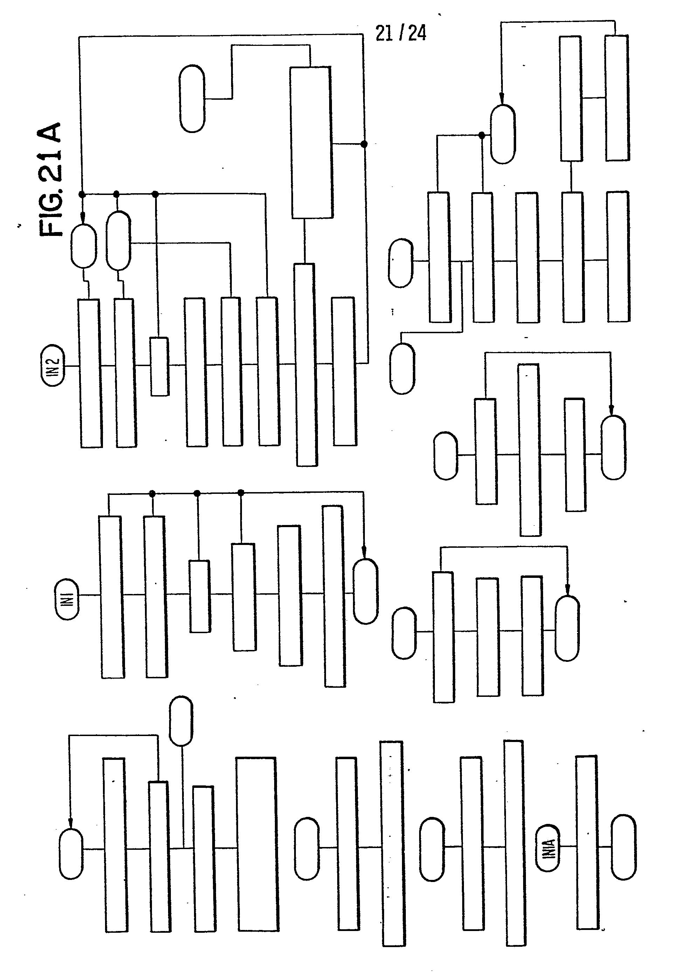

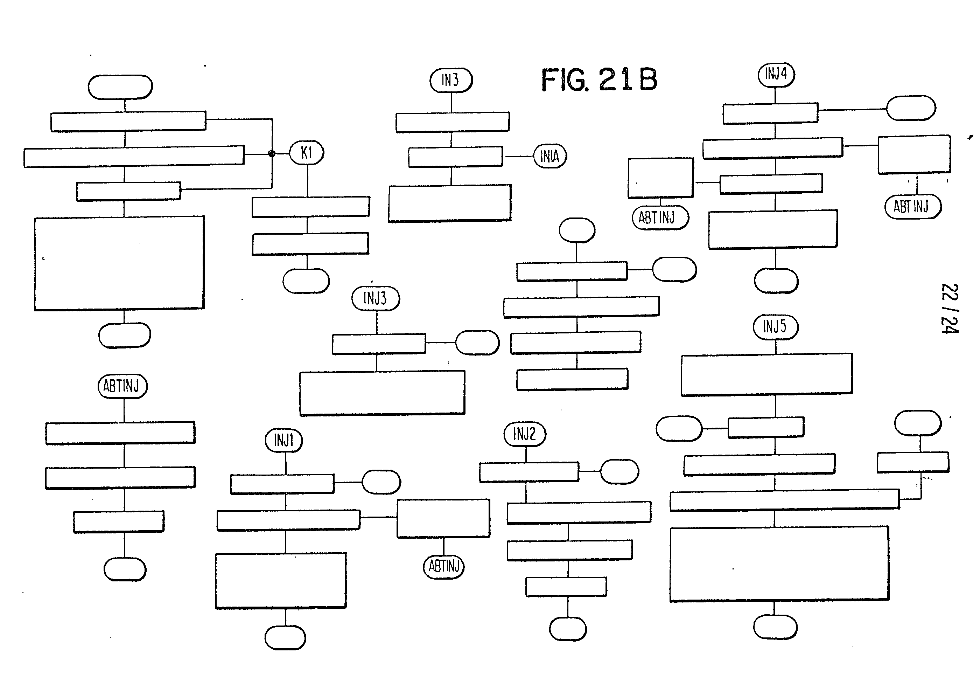

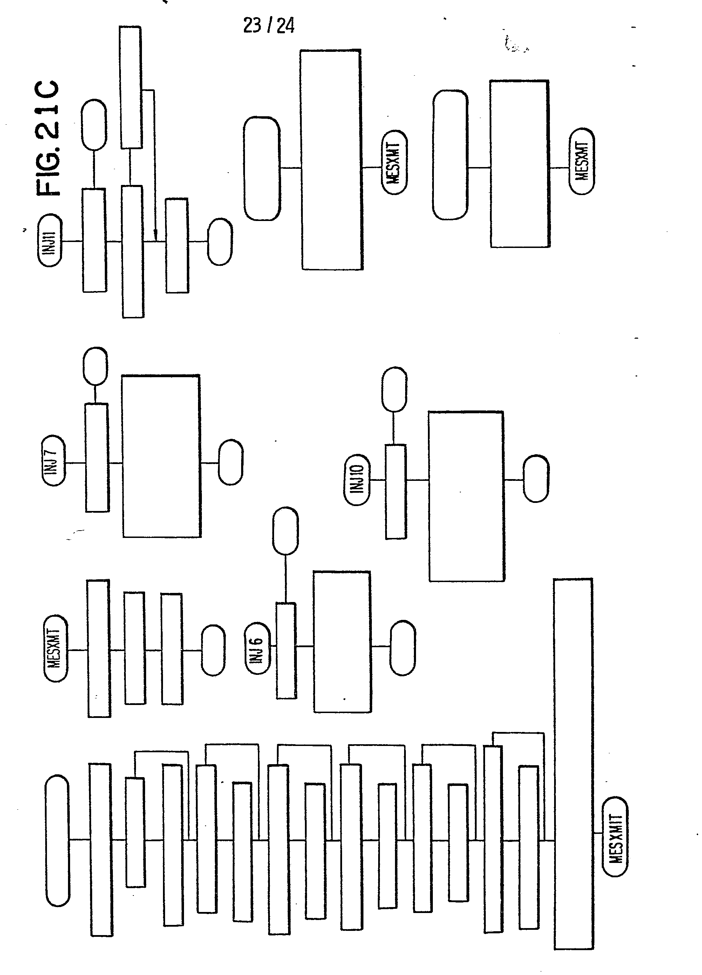

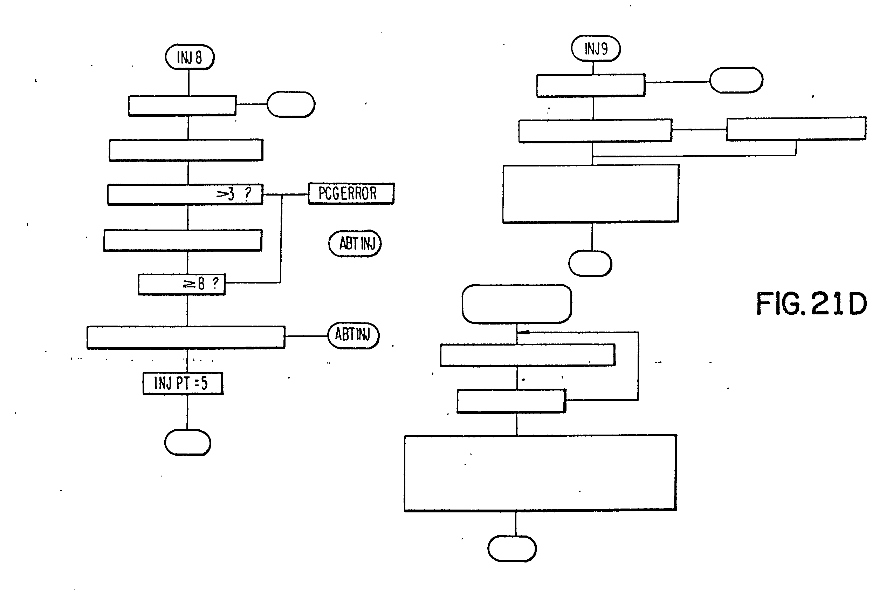

Figure 21 illustrates the flow chart of the software program for the microprocessor 66 located in each substation injection unit.  The program includes three major routines, each of which is broken into smaller parts to maximize the efficiency of the microprocessor.  The three major routines are the INPUT routine where communications are being received at the substation injection unit, the OUTPUT routine where the substation injection unit is outputting information to the master control station, and the INJECT routine where the substation injection unit is involved in injecting the selected pulse code signal onto the substation's power lines.  The INPUT and OUTPUT routines each take approximately 440 milliseconds to run, while the INJECT routine runs for approximately 90 seconds.  The INPUT routine is broken into three routines designated as IN-1, IN-2 and IN-3, the OUTPUT routine is broken into five routines designated as OUT-1, OUT-2, OUT-3, OUT-4 and OUT-5, while the INJECT routine is broken into eleven routines designated as INJ-1 through INJ-11.  Three internal pointers, one for the input, one for the output and one for the injection routines, are set by various steps in the routines in order to loop to other routines in proper sequence.  The pointers utilized may be summarized as follows:

INPUT POINTER

| | |
|---|---|
| O | OUTPUT |
| 1 | IN-1 |
| 2 | IN-2 |
| 3 | IN-3 |

OUTPUT POINTER

| | | |
|---|---|---|
| 0 | | INJECT |
| 1 | | OUT-1 |
| 2 | | OUT-2 |
| 3 | | OUT-3 |
| 4 | | OUT-4 |
| 5 | | OUT-5 |

INJECTION POINTER

| | | |
|---|---|---|
| 0 | | MAIN |
| 1 | | INJ-1 |
| 2 | | INJ-2 |
| 3 | | INJ-3 |
| 4 | | INJ-4 |
| 5 | | INJ-5 |
| 6 | | INJ-6 |
| 7 | | INJ-7 |
| 8 | | INJ-8 |
| 9 | | INJ-9 |
| 10 | | INJ-10 |
| 11 | | INJ-11 |

Each substation injection unit is provided with a manually operable switch having three positions: off, auto and manual. In the auto position, it indicates that the substation injection unit is communicating with the master control station and will inject whatever injection message is received and verified by the master. In the manual position, it indicates that the substation injection unit will communicate with the master, but will not automatically inject.

In the POWER UP initialization routine, all of the RAM locations are tested to see if there are any failures. If not, the timers are initialized, the rectifier and inverter are both turned off, values are read in from the CONSTANTS ROM, the input pointer is set equal to 1 to ready the substation injection unit for receiving an input message, and the output and injection pointers are set equal to zero.

The MAIN routine initially sets a watchdog timer which makes sure that the software program starts from the beginning. After testing to make sure the mode switch is either in auto or manual, the program receives the input pointer and goes to the proper subroutine established by the pointer. In a similar fashion, the INJECT and OUTPUT routines obtain the injection and output pointers, respectively, and then loop to the routine established by the respective pointers.

Referring first to routine IN-1, it first looks to see if a carrier detect flag has been received. The carrier detect flag is a signal from the modem of the substation injection unit which indicates that the master control station is trying to communicate with the substation injection unit. If the carrier detect is up, the routine looks to see if a character has been received. If so, it then checks to to see if there is a framing, parity or overrun error. If not, the routine checks to see if the character is an STX which would indicate the beginning of a transmission from the master control station. If so, a buffer is initialized and the input pointer is set to number 2.

Routine IN-2 first checks to see if a carrier detect is still up, and then to see if a character has been received and if there are any errors in the character. If the carrier detect is not up or there is an error detected, the routine goes to routine IN-1A, which is an abort input routine wherein the input pointer is set to number 1 and the program then loops to the INJECT routine. If there is no error, the character is saved in the buffer until it is full. Then the last character is checked to see if it is an ETX to denote the end of the message from the master control station. If so, the routine then checks to see if this particular message is directed to this particular substation injection unit. If it is not, the routine looks to see if it is a commence keying command which is directed to all substation injection units and, if it is, it directs the program to the KEYING routine. If the message is directed to this particular substation injection unit, the input pointer is set to number 3.

In routine IN-3, the command is decoded and is checked to see if it valid. If it is, the program loops to the proper routine to handle the decoded command.

The OUTPUT routines are similar. Routine OUT-1 first checks to see if a carrier detect is up, and, if it is, the program loops to the INJECT routine. If it is not, the routine raises a request to send flag, which is a signal to its modem that it desires to communicate with the master control station. The output pcinter is then set to number 2.

In routine OUT-2, the substation injection unit checks to see if a clear-to-send flag is up, which is a response from its modem that the lines are clear for communication to the master control station. When this flag is received, a timer is set for a 250 millisecond delay, and the output pointer is set to number 3.

In routine OUT-3, the 250 millisecond delay is checked to see if it is over, and, if it is, a piece of hardware known as the ACIA (Asynchronous Communications Interface Adapte is checked to see if it is ready for a character. If it is, a character is output, and, if all characters have not been sent, the program loops back to OUT-4 to repeat the outputting of a character. After all characters have been output, a 30 millisecond delay is set and the output pointer is set to number 5.

In routine OUT-5, the 30 millisecond delay is checked to see if it is finished, and, if it is, the request to send flag is dropped, the output pointer is set equal to zero and the input pointer is set equal to one. The last two settings cycle the program back to the INPUT routines.

Prior to injection of a pulse code signal, a commence keying command must have been received during INPUT routine IN-2. At that point, the program loops to the KEYING routine which first checks to see if the previously set timeout has expired. The timeout control is a preselected time period, for example, 20 seconds, after which a commence keying command will no longer be valid to commence keying of a previously set up and verified injection message. If the timeout has expired, the program loops to routine K1 where the injection pointer is set equal to zero, the input pointer is set equal to 1, and the program loops to MAIN.

If the timeout has not expired, the KEYING routine checks to see if the last command sent was a "set injection code" command. If not, the program loops back to MAIN. If the last command was a "set injection code", the program checks to see if the mode switch is in auto and, upon determining that it is, the start up rectifier voltage is set, the power contactors are closed, and a 100 millisecond delay is established. The injection pointer is set to 1, which indicates that the substation injection unit is ready for an injection, and the input pointer is also set to one.

The eleven INJECT routines will now be explained. In INJ-1, the program first determines whether the delay set has timed out; if it has, it checks to see if the contactor is closed. If the contactors are not closed, a contactor error is set and the routine loops to ABTINJ, or abort injection. In routine ABTINJ, the contactors are opened, a 100 millisecond delay is established, the injection pointer is set equal to 9, and the program loops back to MAIN.

-90-

If the contactor is closed, INJ-1 then turns on the rectifier, sets a 50 millisecond delay, and sets the injection pointer equal to 2.

In INJ-2, if the 50 millisecond delay is finished, the inverter is turned to its IDLE mode, whereafter a 50 millisecond delay is established and the injection pointer is set equal to 3.

When this 50 millisecond delay is finished, INJ-3 closes the injection contactors, sets a 100 millisecond delay, and sets the injection pointer equal to 4.

When this delay is finished, INJ-4 checks to see if the injection contactor has closed. If it has, it checks the shoot-through counter to see if has counted more than three shoot-throughs for this particular pulse. If so, a pulse code generator error is set and the injection is aborted. If not, a pulse timer is started and the injection pointer is set to 5.

In INJ-5, a timer count is obtained from a counter which is being decremented by a 60 Hertz clock. A table of numbers are stored that correspond to time and indicates when each of the 41 pulses in the pulse code should be sent. The first step in INJ-5 is to check to see whether the current timer count is proper by comparing it with the table count. If it is, the pulse indication is obtained from the special remote receiver unit in the substation injection unit and is checked to see if there should be a pulse in that position. If there should not, the injection pointer is set to 7 and the program cycles to MAIN. If there should in fact be a pulse in the position indicated, the shoot-through counter is cleared, the inverter is set to INJECT whereupon generation of a 340 Hertz pulse is initiated. A 50 millisecond delay is then set, and the injection pointer is set equal to 6.

In routine INJ-6, if the 50 millisecond delay has expired, the power level from the rectifier is changed to its preselected or full value. This is achieved through the rectifier controller, as explained above. Therefore, when the inverter controller initially goes to INJECT in INJ-5, it provides a low voltage level on the output of the rectifiers, after which in INJ-6 the output voltage of the rectifier is raised to its nominal desired value. This is known as a "soft start". The injection pointer is then set to 7.

In routine INJ-7, the program first looks to see if the pulse has been completed. If it has, the information obtained from the special receiver or pulse generator is examined to see if there was or was not a pulse. The output of the rectifier is then set back to the minimum power level, a 50 millisecond delay is set, and the injection pointer is set equal to 8.

If the delay is finished in INJ-8, the inverter is set to IDLE which stops the injection of the 340 Hertz pulse. The routine then checks to see if the shoot-through counter is greater than three for this particular phase. If it is, a pulse code generator error is set and the injection is aborted. If it is not, the contents of the shoot-through counter is added to the previous count, and the total is checked to see if it is greater than or equal to 8. This loop allows three shoot-throughs per pulse and a total of eight shoot-throughs on all pulses output during a single injection. The program then checks to see if the last pulse in the train has been sent. If it has, this injection cycle is over and the program loops to the abort injection routine ABTINJ. If the last pulse has not been sent, the injection pointer is set to 5 to check the next pulse.

-92-

Routine INJ-9 comes into play when an injection is aborted under the ABTINJ routine. The INJ-9 routine first checks to see if the 100 millisecond delay has expired. If it has, it checks to see if the contactor has been opened as requested in the ABTINJ routine. If it has not been opened, a contactor error is indicated. In any event, the inverter is turned to its OFF mode, a 50 millisecond time delay is set, and the injection pointer is set to 10.

In routine INJ-10, when the 50 millisecond time delay has expired, the power contactor in the main breaker is opened, another 100 millisecond time delay is set, and the injection pointer is set to 11.

In INJ-11, after the 100 millisecond delay has expired, the program checks to see if the power contactor has in fact opened. If it has not, contactor error is indicated. In any event, the injection pointer is then set to zero and the program loops back to MAIN.

Recall that in routine IN-3, the decoded command, after validation, is enabled by going to the routine that handles the particular command. These commands can include a polling command, a set injection code command or a report injection code command.

If a polling command is is decoded, the master control station has requested certain information from the substation injection unit. Several conditions are checked in the routine POLLING COMMAND. Upon detection of a positive condition, a flag or bit is set to indicate the detected condition. As is apparent from the flow chart, the following conditions are checked: whether the substation injection unit mode switch is in its manual position; whether any SCRs are overtemperature; whether the cabinet is overtemperature; whether there is neutral shift error; whether there is a contactor error; and whether there is a pulse code generator error. After the status conditions are checked, and the appropriate flags or bits are set, the routine starts an analog conversion, inputs any new analog values, obtains the external discrete inputs, and generates a polling response, then looping to the message transmit or MESXMT routine.

In the MESXMT routine, the substation injection address is set, the output pointer is set equal to one, and the input pointer is set equal to zero, whereupon the substation injection unit is ready to transmit to the master control station.

If the decoded command is to set the injection code, the program loops to the SET INJECTION CODE routine. The injection code received from the master control station is saved in a buffer. Next, a response message is generated using the received injection code, and a one minute timeout is set. The program then loops to MESXMT to transmit the message back to the master control station for verification.

If the decoded command is to report the injection code, the program loops to the REPORT INJECTION CODE routine. First, the injection code read from the special substation injection unit receiver or pulse generator is obtained, and a response message is generated. The program then loops to MESXMT to transmit the message back to the master control station.

Obviously, numerous modifications and variations of the present invention are possible in light of the above teachings. It is therefore to be understood that, within the scope of the appended claims, the invention may be practiced otherwise than as specifically described herein.

-94-

WHAT IS CLAIMED IS:

1. A method for controlling the distribution of power along power lines of an electric utility from a substation to a plurality of loads, characterized by:

(a) generating master control signals under control of a programmable digital data processor;

(b) communicating said control signals to a substation injection unit located at said substation;

(c) injecting pulse code signals onto said power lines under control of a second programmable digital processor in response to said control signals; and

(d) operating at least one of a plurality of remote receiver units in response to said pulse code signals to connect or disconnect a load from said power lines.

2. Method of Claim 1 characterized in that said injecting step comprises converting the frequency of a standard power line voltage signal generated by said utility at said substation to a preselected frequency for said pulse code signals.

3. Method of Claims 1 or 2 characterized in that said communication step provides two-way communications and in that said generation of master control signals includes

polling each of said substation injection units to obtain information pertaining to its status, possible alarm conditions, and analog or discrete data generated at the respective substation;

transmitting and receiving serial binary block messages to and from each of said substation injection units, said block messages including substation injection unit address data, substation injection unit function commands and said data signals; and

prioritizing and executing said group control commands.

4. Apparatus for controlling the distribution of power along power lines of an electric power utility from a substation to a plurality of loads, characterized by:

a master control station including first programmable digital data processor means and input/output devices under the control of an operator for generating master control signals;

at least one substation injection unit located at said substation in communication with said master control station and operating under the control of second programmable digital data processor means for injecting, in response to certain of said master control signals, pulse code signals onto said power lines; and

a plurality of remote receiver units each connected to a particular load device and to said power lines for receiving said pulse code signals, each of said remote receiver units being responsive to one of said pulse code signals for connecting or disconnecting its load from said power lines.

5. Apparatus of Claim 4, characterized in that said substation injection unit further comprises:

means for converting the frequency of a standard power line voltage signal generated by said utility at said substation to a preselected frequency for said pulse code signals;

means responsive to said second data processor means for controlling the output of said frequency converting means to generate said pulse code signals; and

means for injecting said pulse code signals onto said power lines for transmission to said remote receiver units.

6. Apparatus of Claims 4 or 5 characterized in that said frequency converting means comprises:

three-phase rectifier means including a plurality of conduction-controlled solid state devices under the control of said second data processor means for receiving said three-phase power line voltage signal and for developing a DC voltage signal of a predetermined level; and

three-phase inverter means including a plurality of conduction-controlled solid state devices under the control of said second data processor means for receiving said DC voltage signal from said rectifier means and for converting same to said pulse code signal at said preselected frequency.

7. Apparatus of Claims 4, 5 or 6 characterized in that said means for controlling the output of said frequency converting means comprises:

means for controlling the firing time of said solid state devices in said three-phase rectifier means to select one of a plurality of output voltage levels as said predetermined level; and

means for controlling the firing time and sequence of said solid state devices in said three-phase inverter means to establish an idle mode and an inject mode for said inverter means, said idle mode corresponding to the absence of a pulse in said pulse code signals, and said inject mode corresponding to the presence of a pulse in said pulse code signals at said preselected frequency.

8. Apparatus of Claim 6 or 7 characterized in that said means for controlling the firing time of said solid state devices in said three-phase rectifier means includes:

means for receiving the three-phase voltage waveform from said power line;

means for determining when each of said voltage waveforms is greater than the other two waveforms and for providing output signals thereupon; and

means responsive to said output signals of said determining means for turning on and off the gates of said solid state devices in said rectifier means.

9. Apparatus of any one of Claims 5-8 characterized in that said injecting means comprises:

transformer means whose primary is connected to receive said pulse code signals for transforming the relatively low voltage current thereof to a higher voltage and current for injection onto said power lines; and

tuned circuit means connected to the secondary of said transformer means and tuned to said preselected frequency for passing said pulse code signals to the power output bus of said substation.

10. Apparatus of any one of Claims 6-9 further characterized by:

input power contactor means connected in series with said rectifier means for connecting and disconnecting same to said three-phase power line voltage signal;

output power contactor means connected in series with said inverter means for connecting and disconnecting same to said power lines;

power breaker means connected in series with said input and output power contactor means and including a shunt trip circuit responsive to fault conditions for tripping said power breaker means and opening said input and output power contactor means.

11. Apparatus of any one of Claims 6-10 characterized in that said inverter means includes:

first temperature detector means for sending an alarm signal to said second data processor means upon sensing a first temperature level of said solid state devices; and

second temperature detector means for actuating said power breaker means upon sensing a second temperature level of said solid state devices higher than said first temperature level for disabling said substation injection unit by opening said input and output power contactor means.

12. Apparatus of any one of Claims 4-11 characterized in that said second data processor means includes means for controlling communications between said master control station and said substation injection unit.

13. Apparatus of any one of Claims 4-12 characterized in that said substation injection unit further comprises:

analog input means for connecting one or more inputs at said substation indicative of one or more analog system parameters for transmission to said master control station; and

discrete input means for connecting one or more inputs at said substation indicative of one or more discrete system parameters for transmission to said master control station.

14. Apparatus of any one of Claims 4-13 characterized in that said substation injection unit further comprises:

means connected to said power lines for detecting each pulse in said pulse code signals; and

means in said second data processor means for determining whether the outputs of said pulse detecting means consist of a properly timed pulse.

15. Apparatus of any one of Claims 4-14 characterized in that said plurality of substation injection units are in two-way communication with said master control station, and in that said master control station includes:

means for polling each of said substation injection units to obtain information pertaining to its status, possible alarm conditions, and analog or discrete data generated at the respective substation;

means for transmitting and receiving serial binary block messages to and from each of said substation injection units, said block messages including substation
injection unit address data, substation injection unit
function commands and said data signals; and
　　　　　means for prioritizing and executing said
group control commands.


16.　Apparatus of any one of Claims 4-15 further
characterized by
　　　　　means connected to said second data
processor means for receiving an indication of the desired
output voltage level of said rectifier means; and
　　　　　time delay means connected to said
determining means and said voltage level receiving means
for delaying said output of said determining means for a
period of time in accordance with said desired output
voltage level.


17.　Apparatus of any one of Claims 7-16
characterized in that said means for controlling the
firing time and sequence of said solid state devides in
said three-phase inverter means comprises:
　　　　　first means responsive to a mode select
address signal from said second data processor means for
selecting either said idle mode or said inject mode;
　　　　　second means responsive to said first means
for generating register output timing signals; and
　　　　　register means responsive to said first and
second means for providing gate signals in a predetermined
order to said solid state devices in said three-phase
rectifier means.


18.　Apparatus of any one of Claims 10-17 further
characterized by
　　　　　means for sensing fault conditions including
means for sensing overcurrent in the output of said
rectifier means, and means for sensing short circuits
across the DC bus of said inverter means.

19. A method for controlling the distribution of power along power lines of an electric utility characterized by the steps of:

arranging a plurality of loads into individually controllable load control groups;

establishing first, second and third types of control lists, each of said lists including at least one group control command for causing one of said load control groups to be turned on or off;

actuating said first type of control list upon command to execute its group control commands once;

actuating said second type of control list upon command to execute its group control commands cyclically and repetitively; and

actuating said third type of control list upon command to execute its group control commands cyclically and repetitively while taking into account the power demand on said utility.

20. The method of Claim 19 further characterized by the step of dynamically adjusting the on and off times of the loads in those of said control groups belonging to said third type of control list by monitoring the utility's system power demand and lengthening the off times of said loads as said power demand increases in those of said control groups in said third type of control list.

21. The method of Claim 19 or 20 further characterized by the steps of establishing a load profile table indicative of the anticipated total power demand at predetermined intervals of time, and adjusting the on and off times of the loads in those of said control groups belonging to said third type of control list by comparing the actual time with the load profile table.

22. The method of Claim 19, 20 or 21 further characterized by the steps of:

periodically scanning each of said control lists to determine whether it should be activated or deactivated;

periodically checking each of said group control commands in those of said lists that are activated to determine whether the command should be carried out, and

generating data signals for those of said activated group control commands when it is time to carry out said command.


23. A method of injecting a pulse code signal onto power lines of an electric utility for controlling the distribution of power along said power lines characterized by the steps of:

(a) transmitting a first binary injecting message representing said desired control command from said master control station to each of said plurality of substation injection units in turn;

(b) transmitting a second binary injection message representing said desired control command received in step (a) from each of said substation injection units in turn to said master control station;

(c) verifying at said master control station that said second binary message is the same as said first binary message;

(d) transmitting a binary commence keying command signal from said master control station to all of said substation injection units simultaneously;

(e) generating a pulse code signal representing said first binary injection message at each of said substation injection units verified by step (c); and

(f) injecting said pulse code signal generated in step (e) onto the utility's power lines for transmission to a plurality of coded receiver units remotely located at said loads to effect said desired control command.

24. The method of Claim 23 further characterized by the steps of:

(g) positioning a receiver unit in each of said substation injection units for receiving, on a pulse-by-pulse basis, the pulse code signal injected by step (f);

(h) storing the outputs of each of said receiver units in its respective substation injection unit until the full pulse code signal has been injected; and

(i) transmitting said stored outputs from each of said substation injection units to said master control station in turn to verify that said desired control command has been effected.


25. Method for controlling the firing time and sequence of gated conduction-controlled rectifiers in an inverter characterized by the steps of:

(a) providing a portion of address information on an address bus in response to functional commands indicative of the desired mode of operation of said inverter;

(b) generating next address information from a first memory in response to said address information;

(c) receiving said next address information in a first register and delivering the other portion of said address information to said address bus;

(d) generating next gate control signals from a second memory in response to said address information;

(e) receiving said next gate control signals in a second register and providing signals for the gate controlled rectifiers of said inverter.


26. An inverter controller for controlling the firing time and sequence of gated conduction-controlled rectifiers characterized by:

an address bus for providing address information;

means responsive to functional commands indicative of the desired mode of operation of said inverter for providing a portion of said address information on said address bus;

first memory means responsive to said address information on said address bus for generating next address information;

first register means for receiving said next address information from said first memory means and for delivering the other portion of said address information to said address bus;

second memory means responsive to said address information on said address bus for generating next gate control signals; and

second register means for receiving said next gate control signals from said second memory means for providing signals for the gate controlled rectifiers of said inverter.


27. The inverter controller of Claim 26, further characterized by means for receiving clock signals and for generating a plurality of timing signals, said first and second register means being responsive to certain of said timing signals to enable receipt thereby of said next address information and said next gate control signals respectively from said first and second memory means.


28. The inverter controller of Claim 26 or 27 characterized in that said means responsive to functional commands comprises:

mode select register means for receiving said functional commands upon receipt thereby of one of said clock signals and for developing a binary mode select signal in response thereto; and

mode control register means for receiving said mode select signal upon receipt thereby of a first timing signal and an enable mode change signal.

0023254

29. The inverter controller of Claim 28 characterized in that said second memory means is further responsive to said address information for generating said enable mode change signal, said second register means connected to receive said enable mode change signal and to send same to said mode control register means upon receipt of one of a series of second timing signals.


30. The inverter controller of any one of Claims 26-29, characterized in that said first memory means comprises read only memory means having information stored in addressable locations therein pertaining to said next address information, said locations addressed by said address information on said address bus, a portion of said address information comprising said binary mode select signal received from said mode control register means.


31. The inverter controller of Claim 30 characterized in that said read only memory means comprises a next table ROM and a next line ROM each connected to receive said address information on said address bus for respectively providing two and four bits of next address information to said first register means.


32. The inverter controller of Claim 31 characterized in that said first register means comprises a table register and a line register each enabled by a third timing signal for respectively receiving said two and four bits of next address information from said next table ROM and said next line ROM, the six bits of output signals from said table and line registers comprising said other portion of said address information on said address bus.


33. The inverter controller of any one of Claims 26-32 characterized in that said second memory means comprises read only memory means having information stored in addressable locations therein pertaining to the desired firing sequence of said gated conduction-controlled rectifiers in said inverter, said locations being addressed by said address information on said address bus.

34.   The inverter controller of Claim 33 characterized in that said rectifiers in said inverter comprises three pairs of gated conduction-controlled rectifiers arranged in a bridge configuration for converting a DC input voltage signal into three-phase AC output voltage signals, and in that each of said three pairs of gated conduction-controlled rectifiers has a gated conduction-controlled commutation rectifier associated therewith for turning off its associated rectifier when a commutation pulse is received on the gate of said commutation rectifier.

35.   The inverter controller of Claims 33 or 34 characterized in that said read only memory means comprises first and second next main conduction-controlled rectifiers ROMs, each connected to receive said address information on said address bus for respectively providing first and second sets of three bit output signal, said first set of three bit output signals representing the next state desired for one rectifier in each of said three pairs of rectifiers, said second set of three bit output signals representing the next state desired for the other rectifier in each of said three pairs of rectifiers.

36.   The inverter controller of Claim 35 characterized in that said second register means comprises first and second main conduction-controlled rectifier registers each enabled by a second timing signal for respectively receiving said first and second sets of three bit output signals from said first and second main conduction-controlled rectifier ROMs, the six bits of output signals from said first and second main conduction- controlled rectifer registers comprising said signals for the controlled rectifiers of said inverter.


37. The inverter controller of Claims 35 or 36 characterized in that certain of said addressable locations in said read only memory means has information pertaining to permissible times for changing modes of said inverter, said certain addressable locations being addressable by said address information on said address bus to generate a one bit enable mode change signal which is received by said second register means for transmission to said mode control register means upon receipt by said second register means of certain of said second timing signals.


38. The inverter controller of Claim 36 characterized in that said read only memory means further comprises a next commutate conduction-controlled rectifier ROM connected to receive said address information on said address bus for providing a third set of three bit output signals that represent the next state desired for the six commutation rectifiers of said inverter.


39. The inverter controller of Claim 38 characterized in that said second register means further comprises a commutation conduction-controlled rectifier register enabled by a fourth timing signal for receiving said third set of three bit output signals.


40. The inverter controller of Claim 39 characterized in that said commutation conduction-controlled rectifier register comprises a decoder for translating said third set of three bit output signals from said next
conduction-controlled rectifier ROM into six gate control
signals, one for each of said six commutation rectifiers
in said inverter.


41.  The inverter controller of any one of Claims
28-40 characterized in that said means for receiving clock
signals and for generating a plurality of timing signals
comprises:
        means for receiving a first clock signal
which is six times the desired inverter output frequency
and for receiving a second clock signal;
        counter means for generating a series of
address codes in accordance with said second clock signal;
        memory means having a plurality of
addressable locations certain of which contain timing
data, said locations addressed by said series of address
codes for producing said timing signals each time said
certain memory locations are addressed; and
        timing register means connected to said
memory means for producing said timing signals as outputs
upon receipt of said second clock signal, wherein one of
said timing signals comprises said first timing signals.


42.  A method of controlling the firing of solid
state gate controlled rectifying devices in a rectifier
bridge that rectifies three-phase AC voltage signals to
provide a direct current output, characterized by the step
of:
        providing gate signals to said devices when
each phase voltage of said three-phase alternating current
voltage signals is most positive and most negative with
respect to the other two phase voltage signals.


43.  The method of Claim 42, further
characterized by the steps of:

detecting when the magnitude of each phase voltage of the three-phase alternating current voltage signal input to said rectifier bridge is greater than the other two phase voltages; and correlating the results of said detecting step to determine the most positive and most negative times of each of said phase voltages.

44. A controller for a rectifier of first, second and third phase alternating current voltage signals for supplying a controlled direct current voltage to a load, said rectifier including three pairs of solid state gate controlled rectifying devices connected in a bridge configuration to a common output bus, each of said pair of devices connected to receive one of said first, second or third phase voltage signals to rectify both the positive half and negative half of the respective applied voltage signal, characterized by:

means for detecting when each of said first, second and third voltage signals is greater than the other two signals and for providing output signals thereupon; and

means responsive to said output signals for providing gate control signals to turn on the gates of said solid state gate controlled rectifying devices when each of said voltage signals are most positive and most negative with respect to the other two voltage signals.

45. The rectifier controller of Claim 44 characterized in that said detection means comprises voltage detection means for receiving said first, second and third voltage signals and for providing six outputs when respective ones of said voltage signals are greater than the others; and in that

said means for providing gate control signals comprises logic means responsive to said six outputs for providing a first set of three gate control signals for indicating which of said voltage signals are most positive at

any point in time, and for providing a second set of three gate control signals for indicating which of said voltage signals are most negative at any point in time, said first set of three gate control signals connected to be applied to the gates of one of said devices in each pair, said second set of three gate control signals connected to be applied to the gates of the other of said devices in each pair.

46. The rectifier controller of Claim 45 characterized in that said logic means is further responsive to comparator means also responsive to said voltage signals for generating a dwell output each time any of said voltage signals are equal.

47. The rectifier controller of Claim 46 further characterized by:

means connected to said logic means and responsive to an input command for delaying said first and second sets of gate control signals for a predetermined time period.

48. The rectifier controller of Claim 47 characterized in that said means responsive to an input command comprises:

means for receiving said input command;

counter means connected to said means for receiving said input command for counting a number in accordance with said input command and for providing a count output signal when said number has been counted; and

means connecting said count output signal to said logic means to delay said gate control signals in time in accordance with the time period required to count said number.

49. A method for fault detection for an inverter having a plurality of conduction-controlled solid state devices supplied by a source of direct current on a DC bus, characterized by the steps of:

(a)   detecting a shoot-through condition in said conduction-controlled solid state devices

(b)   short circuiting said DC bus in response to the detection of said shoot-through condition

50.   A fault detector for an inverter having a plurality of conduction-controlled solid state devices supplied by a source of direct current on a DC bus, characterized by:

means for detecting a shoot-through condition which exists in said conduction-controlled solid state devices of said inverter; and

means responsive to said means for detecting a shoot-through condition for short circuiting said DC bus.

51.   The fault detector of Claim 50 characterized in that said means for detecting a shoot-through condition comprises:

capacitor means connected across said DC bus;

inductor means connected in series with said DC bus; and

means responsive to the current from said. capacitor means for generating a shoot-through voltage which indicates a shoot-through condition.

52.   The fault detector of Claim 51 characterized in that said means responsive ito the current from said capacitor means comprises a transformer having a primary coil for receiving said current and a secondary coil.

53.   The fault detector of Claim 52 further characterized by means for blocking the output voltage of said transformer until a predetermined voltage is present across said secondary coil.

-111-

54. The fault detector of Claim 53 characterized in that said means for blocking the output voltage of said transformer comprises a Zener diode in series connection with said secondary coil of said transformer.

55. The fault detector of any one of Claims 50-54 characterized in that said means for short circuiting said DC bus comprises a condution controlled rectifier connected across said DC bus.

56. The fault detector of Claims 52-55 characterized in that said transformer comprises a saturable core transformer.

FIG. 1

# FIG. 2

# FIG. 3

# FIG. 5

2/24

## FIG. 4

## FIG. 10

# FIG.6

FIG. 7 A

FIG. 7

FIG. 7A | FIG. 7 B

6 / 24

FIG. 7 B

FIG. 8

FIG.9

8/24

66 104

16 BIT

8 BIT

8 BIT

101

106

102 100

8

108

FIG.22

(Y)

0

0

0023254

ØA  ØB  ØC

110        128        120        132

130

124

122        126

112

FIG. 11

114

116

118

# FIG. 12

11/24

FIG. 13 A

0023254

12 / 24

FIG.13 B

0023254

13 / 24

FIG. 13C

| FIG. – 13 A | FIG. – 13 B | FIG. – 13 C |
|---|---|---|

FIG.13

FIG. 14 A

FIG. 14 B

FIG. 14 C

FIG. 15

15/24

0023254

FIG. 16

FIG.17

17/24

0023254

FIG.18

18/24

0023254

FIG.19

FIG. 20

FIG. 21 A

FIG. 21 B

FIG. 21C

MESXMT

INJ 7

INJ11

INJ 6

INJ 10

MESXMIT

MESXMT

MESXMT

23/24

0023254

FIG.21D